# EUROPÄISCHE PATENTSCHRIFT

(11) **EP 3 891 718 B1**
(45) Veröffentlichungstag und Bekanntmachung des Hinweises auf die Patenterteilung: **13.09.2023**
(21) Anmeldenummer: 19808725.6
(22) Anmeldetag: 19.11.2019
(51) Int. Cl.: G08G 5/00, G08G 3/00, G01S 3/14, G10L 15/26, G01S 3/04

(54) **VORRICHTUNG, VERFAHREN UND COMPUTERPROGRAMM ZUR VERARBEITUNG EINES SPRECH-FUNKSIGNALS**
DEVICE, METHOD AND COMPUTER PROGRAM FOR HANDLING SPEECH RADIO SIGNALS
APPAREIL, MÉTHODE ET PROGRAMME D'ORDINATEUR POUR TRAITER DES SIGNAUX RADIO VOCAUX

(30) Priorität: 07.12.2018 EP 18211076
(43) Veröffentlichungstag der Anmeldung: 13.10.2021
(73) Patentinhaber: Fraunhofer-Gesellschaft zur Förderung der angewandten Forschung e.V., 80686 München (DE); Rhotheta Elektronik GmbH, 82418 Murnau am Staffelsee (DE)
(72) Erfinder: JOHN, Ole, 21073 Hamburg (DE); ZVEREV, Ivan, 82362 Weilheim (DE)
(74) Vertreter: Zimmermann, Tankred Klaus
(86) Internationale Anmeldenummer: PCT/EP2019/081751
(87) Internationale Veröffentlichungsnummer: WO 2020/114764

(56) Entgegenhaltungen:
- EP-A2- 3 203 458
- DE-A1- 19 619 015
- US-A- 3 824 596
- US-A1- 2013 346 081
- US-A1- 2016 202 950

## Beschreibung

### Technisches Gebiet

Ausführungsbeispiele gemäß der Erfindung beziehen sich auf eine Vorrichtung, ein Verfahren und ein Computerprogramm zur Verarbeitung eines Sprech-Funksignals.

### Hintergrund der Erfindung

Im maritimen Sektor, im Luftfahrtsektor als auch im landbezogenen Sektor gibt es derzeit keine technische Lösung, die eine Nachverfolgung des gesprochenen Funks (z. B. des UKW-Seefunks, des Flugfunks, des UKW-Landfunks, etc.) in Verbindung mit einer Senderidentifikation ermöglicht. Ein System das die Techniken zur Spracherkennung, Auswertung von Senderinformationsdaten (wie z. B. AIS-Daten (Schifffahrt) oder ADS-B-Daten (Luftfahrt)) und Funkpeilung verknüpft, ist derzeit nicht bekannt.

Viele Versionen von Funkgeräten besitzen heute Aufzeichnungsfunktionen, die für einen definierten Zeitraum empfangene Sprech-Funksignale speichern, um sie nachträglich abspielen zu können (Last Call Voice Recording). Somit können heute nur fragmentarische Ausschnitte von Kommunikationsverläufen für einen kurzen Zeitabschnitt als Audioaufzeichnung wiedergeben werden. Weiter ist die Erkennung der Absender von Funksprüchen bzw. die Zuordnung der eingegangenen Kommunikation zu im Empfangsbereich befindlichen Funkstellen (z. B. Schiffe, Flugzeuge, Landfahrzeuge, etc.) nicht gegeben. Absender von Funknachrichten können nur indirekt über bestehende Informationssysteme (wie z. B. AIS, ADS-B, GPS-Daten, etc.) bestimmt werden.

Das Dokument DE19619015A1 betrifft ein Verfahren und eine Anordnung zur Verkehrsüberwachung, insbesondere auf Flughäfen. Es ist eine Datenverarbeitungsanlage vorgesehen, die mit Einrichtungen zur Positionsbestimmung und einer Spracherkennungseinrichtung verbunden ist und durch Datenfusion ihrer Eingangsdaten eine eindeutige Ortung und Identifizierung der Verkehrsteilnehmer an eine Ausgabeeinheit weitergibt.

Das Dokument EP3203458A2 betrifft ein System und ein Verfahren zur Überwachung eines Kommunikationskanals in der Luftfahrt und zur selektiven Anzeige relevanter Informationen.

In Anbetracht dessen existiert ein Bedarf für ein Konzept, das ein verbessertes Verständnis eines empfangenen Sprech-Funksignals, eine Nachvollziehbarkeit vergangener und evtl. entgangener Sprech-Funksignale durch eine Verlaufsdokumentation derer, sowie eine Lokalisation und Identifikation des Absenders ermöglicht.

Diese Aufgabe wird durch die unabhängigen Patentansprüche gelöst.

Erfindungsgemäße Weiterbildungen sind in den Unteransprüchen definiert.

### Zusammenfassung der Erfindung

Ein Ausführungsbeispiel betrifft eine Vorrichtung zur Verarbeitung eines Sprech-Funksignals mit einer Transkriptionseinheit, die ausgebildet ist, um das Sprech-Funksignal in ein Textsignal umzuwandeln. Ferner weist die Vorrichtung eine Objektermittlungseinheit auf, die ausgebildet ist, um ein Objekt, von dem das Sprech-Funksignal stammt, zu bestimmen. Die Vorrichtung weist ferner eine Objektlokalisationseinheit auf, die ausgebildet ist, um eine Positionsinformation des Objekts, von dem das Sprech-Funksignal stammt, zu bestimmen. Die Objektlokalisationseinheit umfasst zumindest einen Funkpeiler, der ausgebildet ist, um Peildaten zu bestimmen, die eine Position oder ein Gebiet, aus dem das Sprech-Funksignal stammt, angeben. Die Objektlokalisationseinheit umfasst ferner einen Positionsdatenempfänger oder ist ausgebildet, um mit demselben zu kommunizieren, um Positionsdaten zu erhalten, die Positionen von Objekten in einer Umgebung der Vorrichtung angeben. Die Peildaten bilden zusammen mit den Positionsdaten die Positionsinformation. Die Vorrichtung weist ferner eine Ausgabeeinheit auf, die ausgebildet ist, um das Textsignal dem Objekt zuzuordnen und bereitzustellen. Unter einem Sprech-Funksignal kann eine Sprachnachricht verstanden werden, die von einem Funksignalsender an einen Funksignalempfänger gesendet wird, wobei das Objekt sowohl einen Funksignalsender als auch einen Funksignalempfänger aufweisen kann. Das Textsignal, bestimmt mittels der Transkriptionseinheit, kann das Sprech-Funksignal als Nachricht in Textform (z. B. ASCII) darstellen. Die Objektermittlungseinheit ist ausgebildet, um für die Objekte in der Umgebung der Vorrichtung jeweils eine Erkennungswahrscheinlichkeit zu bestimmen, wobei die Erkennungswahrscheinlichkeit einen Grad einer Übereinstimmung der Positionsdaten mit den Peildaten definiert. Die Objektermittlungseinheit ist ausgebildet, um bei mehreren Objekten mit einer sehr ähnlichen Erkennungswahrscheinlichkeit, alle Objekte mit der ähnlichen Erkennungswahrscheinlichkeit als das Objekt, von dem das Sprech-Funksignal stammt, zu bestimmen. Die Ausgabeeinheit ist ausgebildet, um in diesem Fall dem Textsignal all diese Objekte mit der ähnlichen Erkennungswahrscheinlichkeit zuzuordnen und jeweils die Erkennungswahrscheinlichkeit mit anzugeben.

Dieses Ausführungsbeispiel der Vorrichtung basiert auf der Erkenntnis, dass eine Kommunikation über Funk sehr gut nachvollzogen werden kann, wenn das Sprech-Funksignal mittels der Transkriptionseinheit in ein Textsignal umgewandelt wird, da jederzeit in dem Textsignal Informationen aus der Funkkommunikation ermittelt werden können und somit fehlerhafte Erinnerungen an die sprachliche Funkkommunikation vermieden werden. Ferner ermöglicht eine Zuordnung von Positionsinformationen und/oder Objektidentifikationsinformationen des Objekts zu dem Textsignal, dass ein Absender des Sprech-Funksignals identifiziert oder lokalisiert werden kann und somit die Funkkommunikation sehr genau und gut dokumentiert werden kann. Besonders beispielsweise bei Rettungseinsetzen an Land, in der Luft oder im maritimen Bereich ist es von Vorteil, die Funkkommunikation während eines Einsatzes sowie nach einem Einsatz nachvollziehen zu können und einzelnen Objekten, wie z. B. Schiffen, Flugzeugen oder Landfahrzeugen, zuordnen zu können. Jedes Objekt, das ein Sprech-Funksignal aussenden kann, kann auch eine hierin beschriebene Vorrichtung aufweisen. Somit kann mit der Vorrichtung ermöglicht werden, dass jedes Objekt, das an der Funkkommunikation teilnimmt, mit der Vorrichtung nachvollziehen kann, wann und wo welches Objekt ein mit der Vorrichtung dokumentiertes Textsignal als Sprech-Funksignal mitgeteilt hat.

Somit ist festzuhalten, dass die Vorrichtung ausgebildet ist, um Sprech-Funksignale verständlich zu machen, indem diese zu Textsignalen umgewandelt werden, Inhalte aus den Sprech-Funksignalen mittels des Textsignals nachzulesen bzw. nachzurecherchieren und den Absender des Sprech-Funksignals zu identifizieren und zu lokalisieren.

Die Objektlokalisationseinheit ist ausgebildet, um als Positionsinformation ein Gebiet zu bestimmen, in dem das Objekt mit einer Wahrscheinlichkeit angeordnet ist. Die Objektlokalisationseinheit kann zumindest eine Lokalisationsvorrichtung aufweisen oder ausgebildet sein um mit der zumindest einen Lokalisationsvorrichtung zu kommunizieren, um eine Quelle des Sprech-Funksignals als das Gebiet zu bestimmen. Bei dem Gebiet handelt es sich beispielsweise um ein Gebiet mit einer Ausdehnung in einer Dimension (z. B. eine Linie (z. B. Peilstrahl), die die Richtung des ankommenden Sprech-Funksignals angibt), in zwei Dimensionen (eine Fläche jeglicher Form, wie z. B. einer Kreisfläche, einem Kreissektor, einem Dreieck, einem Rechteck, einem Polygon etc.) oder eine Ausdehnung in drei Dimensionen (z. B. Körper mit Formen jeglicher Art, wie z. B. ein kugelförmiges Gebiet, ein kegelförmige Gebiet, ein quaderförmiges Gebiet, etc.). Das Gebiet definiert beispielsweise eine Richtung, aus dem das Sprech-Funksignal kommt, woraus die Objektlokalisationseinheit darauf schließen kann, dass das Objekt in diesem Gebiet angeordnet ist. Dabei kann die Objektlokalisationseinheit eine Wahrscheinlichkeit bestimmen, mit der das Objekt in dem Gebiet angeordnet ist, wobei die Wahrscheinlichkeit angeben kann, wie genau die zumindest eine Lokalisationsvorrichtung das Gebiet bestimmen kann. Somit wird bereits eine grobe Lokalisation möglich, wodurch die Vorrichtung beispielsweise für Rettungseinsätze verwendet werden kann, da mittels der Objektlokalisationseinheit das Objekt, das ein Not-Sprech-Funksignal ausgesendet hat, auch bei schlechter sprachlicher Verständlichkeit (die Position des Objekts ist z. B. nicht verständlich oder wird nicht mitgeteilt) lokalisiert werden kann, um Rettungskräfte in die Richtung des Objekts (z. B. dem Gebiet) zu schicken.

Gemäß der Erfindung umfasst die Lokalisationsvorrichtung zumindest einen Funkpeiler. Mittels des zumindest einen Funkpeilers kann die Objektlokalisationsvorrichtung eine Quelle des Sprech-Funksignals auf das Gebiet begrenzen. In anderen Worten kann somit das Gebiet die Quelle des Sprech-Funksignals aufweisen. Werden beispielsweise mehrere Funkpeiler verwendet, so kann das Gebiet verkleinert und/oder die Wahrscheinlichkeit erhöht sein bzw. eine exakte Position des Objekts mittels der Objektlokalisationseinheit bestimmt werden.

Die Objektlokalisationseinheit ist ferner ausgebildet, um Positionsdaten (z. B. GPS-Positionen, Kurse, Routen, Geschwindigkeiten, etc.) von Objekten zu empfangen. Hierbei wird z. B. nicht das Sprech-Funksignal lokalisiert, sondern Objekte, die in einem Umkreis (z. B. bis zu einer maximalen Entfernung von der Vorrichtung von 20 km, 50 km, 100 km oder 1000 km) der Vorrichtung angeordnet sind. Dies ermöglicht Positionsinformationen von potentiellen Objekten, von denen das Sprech-Funksignal stammen kann, zu bestimmen. Optional ist die Objektlokalisationseinheit ausgebildet, um Positionsdaten (z. B. GPS-Positionen, Kurse, Routen, Geschwindigkeiten, etc.) von Objekten in dem Gebiet (aus dem das Sprech-Funksignal kommt) zu empfangen. Hierdurch wird nicht nur ermöglicht, ein Gebiet zu bestimmen, aus dem das Sprech-Funksignal stammt (beispielsweise mittels der Lokalisationsvorrichtung), sondern zusätzlich sehr exakte Positionsdaten von Objekten, die möglicherweise das Sprech-Funksignal ausgesendet haben, zu bestimmen. Somit begrenzt sich eine Ortung (bzw. Objektermittlung mittels der Objektermittlungseinheit) des Objekts, das das Sprech-Funksignal ausgesendet hat, nicht auf das komplette Gebiet, sondern auf einzelne Positionen in dem Gebiet. Dies ermöglicht eine optimierte Lokalisation und Zuordnung des Sprech-Funksignals zu einem Objekt.

Gemäß einem Ausführungsbeispiel kann die Objektlokalisationseinheit einen AIS-Empfänger, einen ADS-B-Empfänger, eine Radaranlage und/oder einen allgemeinen Positionsdatenempfänger aufweisen oder mit demselben kommunizieren, um die Positionsdaten zu empfangen. Die Positionsdaten können eine GPS-Position, eine Route, eine Geschwindigkeit und/oder eine Höhe, bezogen zu einem Meeresspiegel, aufweisen. Dabei können je nach Objekt die Positionsdaten von einem anderen Empfänger empfangen werden. So können beispielsweise von dem AIS-Empfänger die Positionsdaten von Schiffen, von dem ADS-B-Empfänger die Positionsdaten von Flugzeugen, von der Radaranlage die Positionsdaten von metallischen Objekten, wie z. B. Schiffen, Flugzeugen, Fahrzeugen, etc., und von dem allgemeinen Positionsdatenempfänger die Positionsdaten von einer Vielzahl an denkbaren Objekten, wie z. B. Landfahrzeugen, empfangen werden. Dies ermöglicht die Vorrichtung zur Verarbeitung eines Sprech-Funksignals sehr vielfältig, sowohl an Land, im Gewässer als auch in der Luft zu verwenden. Durch die spezielle Kombination von Empfängern, zum Empfangen von Positionsdaten von Objekten, und Funkpeilern, die ein Gebiet bestimmen, aus dem das Sprech-Funksignal mit einer Wahrscheinlichkeit kommt, in der Objektlokalisationseinheit, wir ermöglicht ein Objekt, von dem das Sprech-Funksignal stammt, sehr schnell und genau zu bestimmen. Somit kann ein Sprech-Funksignal sehr effizient einem Objekt und dessen Position zugeordnet werden.

Gemäß einem Ausführungsbeispiel kann die Objektermittlungseinheit einen AIS-Empfänger, einen ADS-B-Empfänger und/oder einen allgemeinen Objektidentifikations-Empfänger aufweisen oder mit demselben kommunizieren, um Objektidentifikationsdaten zumindest eines Objekts zu erhalten, dessen Position zumindest teilweise mit der durch die Objektlokalisationseinheit bestimmten Positionsinformation übereinstimmt. Diese Übereinstimmung kann z. B. bedeuten, dass die Objektermittlungseinheit die Positionsdaten von Objekten mit dem Gebiet, das die Quelle des Sprech-Funksignals aufweist, abgleicht und nur von Objekten in dem Gebiet die Objektidentifikationsdaten erhält. Somit ist die Objektermittlungseinheit beispielsweise ausgebildet, um einem durch die Objektlokalisationseinheit lokalisierten Objekt Objektidentifikationsdaten, wie z. B. eine Rufnummer des mobilen Seefunkdienstes (MMSI), einen Objektnamen, ein Ziel des Objekts, eine Ladung des Objekts und/oder eine Größe des Objekts, zuzuordnen. Dies ermöglicht, dass das Sprech-Funksignal mittels der Vorrichtung nicht nur einer Positionsinformation, z. B. einer Lokalisation des Sprech-Funksignals, sondern zusätzlich dem Objekt, von dem das Sprech-Funksignal stammt, zugeordnet werden kann. Dabei ist die Objektermittlungseinheit ausgebildet, um beispielsweise über den AIS-Empfänger Objektidentifikationsdaten von Schiffen, über den ADS-B-Empfänger Objektidentifikationsdaten von Flugzeugen und/oder von dem allgemeinen Objektidentifikations-Empfänger von anderweitigen Objekten, wie z. B. Landfahrzeugen, Objektidentifikationsdaten zumindest eines Objekts zu erhalten. Dabei kann die Positionsinformation, ermittelt durch die Objektlokalisationseinheit, beispielsweise eine exakte GPS-Position darstellen, wodurch die Objektermittlungseinheit beispielsweise nur von einem Objekt, dessen Position exakt mit der bestimmten Positionsinformation übereinstimmt, die Objektidentifikationsdaten erhält. Wenn die durch die Objektlokalisationseinheit bestimmte Positionsinformation, beispielsweise ein Gebiet definiert, kann die Objektermittlungseinheit Objektidentifikationsdaten von mehreren Objekten erhalten, deren Position sich innerhalb des Gebiets befinden.

Gemäß einem Ausführungsbeispiel können die Objektidentifikationsdaten eine Rufnummer des mobilen Seefunkdienstes (MMSI), einen Objektnamen, ein Ziel des Objekts, eine Ladung des Objekts und/oder eine Größe des Objekts aufweisen. Somit wird beispielsweise ermöglicht, dass durch die Zuordnung der Rufnummer des mobilen Seefunkdienstes ein Benutzer der Vorrichtung beispielsweise das Objekt, von dem das Sprech-Funksignal stammt, sehr einfach kontaktieren kann. Ferner können durch die Zuordnung des Objektnamens zu dem jeweiligen Sprech-Funksignal in einer Funkkommunikation von mehreren Objekten, unterschiedliche Sprech-Funksignale einzelnen Objekten über den Objektnamen zugeordnet werden, um dadurch die Funkkommunikation nachvollziehbar zu gestalten. Das Ziel des Objekts, die Ladung des Objekts und/oder die Größe des Objekts können weitere wichtige Objektidentifikationsdaten darstellen, die zusammen mit dem Sprech-Funksignal eine sehr detaillierte und effizient weiterzuverarbeitende Information in einer Funkkommunikation darstellen können. Hierbei ist insbesondere vorteilhaft, dass die Vorrichtung ausgebildet ist, um das Sprech-Funksignal in Form eines Textsignals mit den Objektidentifikationsdaten zusammen bereitzustellen (beispielsweise über die Ausgabeeinheit).

Die Objektermittlungseinheit ist ausgebildet, um für zumindest ein Objekt, dessen Position zumindest teilweise mit der bestimmten Positionsinformation übereinstimmt, eine Erkennungswahrscheinlichkeit zu bestimmen. Ferner ist die Objektermittlungseinheit beispielsweise ausgebildet, um das Objekt mit der höchsten Erkennungswahrscheinlichkeit als das Objekt, von dem das Sprech-Funksignal stammt, zu bestimmen. Die Erkennungswahrscheinlichkeit definiert beispielsweise eine Wahrscheinlichkeit, gemäß der das Sprech-Funksignal von dem Objekt stammt. Die Erkennungswahrscheinlichkeit ermöglicht beispielsweise der Objektermittlungseinheit ein einzelnes Objekt dem Sprech-Funksignal bzw. dem korrespondierenden Textsignal zuzuordnen, wenn die Objektermittlungseinheit beispielsweise mehrere Objekte identifiziert, deren Position zumindest teilweise mit der durch die Objektlokalisationseinheit bestimmten Positionsinformation übereinstimmen. Somit wird ermöglicht, dass die Vorrichtung eindeutig dem Sprech-Funksignal bzw. dem Textsignal ein Objekt zuordnet.

Die Objektermittlungseinheit ist ausgebildet, um bei einer sehr ähnlichen Erkennungswahrscheinlichkeit (z. B. eine Abweichung von ±1 %, ±2 % oder ±5 %) alle Objekte mit der ähnlichen Erkennungswahrscheinlichkeit als das Objekt zu bestimmen und die Ausgabeeinheit ist ausgebildet, um in diesem Fall dem Textsignal all diese Objekte zuzuordnen und jeweils die Erkennungswahrscheinlichkeit mit anzugeben. Optional kann in diesem Fall die Vorrichtung ausgebildet sein, um zumindest zwei zeitlich kurz (z. B. innerhalb von maximal 5 min, innerhalb von maximal 30 min, innerhalb von maximal 1h oder innerhalb von maximal 5h) aufeinanderfolgende Sprech-Funksignale von demselben Objekt zu analysieren, um die Erkennungswahrscheinlichkeit zu erhöhen. Zwischen den zumindest zwei Sprech-Funksignalen kann sich die Position des Objekts verändert haben und diese Positionsänderung kann zum Beispiel mittels der Objektermittlungseinheit mit einem Kurs oder einer Route von Objekten, deren Position zumindest teilweise mit der Positionsinformation übereinstimmt, verglichen werden. Gemäß einem Ausführungsbeispiel kann die Vorrichtung ausgebildet sein, um mittels Sprachmuster-Codes zu bestimmen, ob die zumindest zwei kurz aufeinanderfolgenden Sprech-Funksignale von demselben Objekt stammen.

Gemäß einem Ausführungsbeispiel ist die Objektermittlungseinheit ausgebildet, um mit der Transkriptionseinheit zu kommunizieren, um aus dem Textsignal eine Objektidentifikation des Objekts zu ermitteln. So kann beispielsweise das Sprech-Funksignal bereits eine Objektidentifikation aufweisen (so kann der Funker, der das Sprech-Funksignal beispielsweise aussendet, seinen Namen nennen und/oder einen Namen bzw. eine Identifikation des Objekts, von dem das Sprech-Funksignal ausgesendet wird, mitteilen), die mittels der Transkriptionseinheit transkribiert werden kann und mittels der Objektermittlungseinheit aus dem transkribierten Textsignal ermittelt werden kann. Somit wird ermöglicht, dass die Objektermittlungseinheit mit einer beispielsweise 100 prozentigen oder sehr hohen Erkennungswahrscheinlichkeit das Objekt ermittelt, ohne Positionen von Objekten mit von der Objektlokalisationseinheit ermittelten Positionsinformationen abgleichen zu müssen. Optional kann der Abgleich dennoch zur Überprüfung erfolgen.

Gemäß einem Ausführungsbeispiel ist die Transkriptionseinheit ausgebildet, um aus dem Sprech-Funksignal einen Sprachmuster-Code zu extrahieren und der Objektermittlungseinheit bereitzustellen. Ferner kann die Objektermittlungseinheit ausgebildet sein, um basierend auf dem Sprachmuster-Code das Objekt, von dem das Sprech-Funksignal stammt, zu bestimmen. Der Sprachmuster-Code kann beispielsweise einem Funker, der einem Objekt zugeordnet werden kann, zugeordnet sein. Gemäß einem Ausführungsbeispiel kann die Vorrichtung eine Datenbank aufweisen oder ausgebildet sein, um auf die Datenbank zuzugreifen, wobei die Datenbank Sprachmuster-Codes, zugeordnet zu Funkern bzw. Objekten, aufweisen kann. Alternativ ist es auch möglich, dass die Vorrichtung den Sprachmuster-Code, bei einem ersten Sprech-Funksignal, extrahiert und das zugehörige Objekt mittels der Objektermittlungseinheit bestimmt und daraufhin den Sprachmuster-Code mit dem Objekt zwischenspeichert, um bei einem darauffolgenden zweiten Sprech-Funksignal den Sprachmuster-Code zu erkennen und nicht erneut mittels der Objektermittlungseinheit das Objekt bestimmen zu müssen, sondern direkt aus dem zwischengespeicherten Sprachmuster-Code die zugeordneten Objektidentifikationsinformation zu ermitteln. In anderen Worten kann die Objektermittlungseinheit ausgebildet sein, um zunächst unabhängig von dem ermittelten Sprachmuster-Code die Objektidentifikationsdaten des Objekts zu bestimmen und bei einem zweiten Sprech-Funksignal mit demselben Sprachmuster-Code die Objektidentifikationsdaten des Objekts basierend auf dem Sprachmuster-Code zu bestimmen.

Gemäß einem Ausführungsbeispiel ist die Transkriptionseinheit ausgebildet, um ein neuronales Netzwerk zu nutzen, um das Sprech-Funksignal in ein Textsignal umzuwandeln. Dies ermöglicht beispielsweise, dass die Transkriptionseinheit mittels des neuronalen Netzwerks oft verwendete Phrasen in den Sprech-Funksignalen erkennt und damit eine sehr effiziente, schnelle und erleichterte Umwandlung des Sprech-Funksignals in das Textsignal ermöglicht wird.

Gemäß einem Ausführungsbeispiel ist die Vorrichtung ausgebildet, um zumindest zwei Sprech-Funksignale gleichzeitig und/oder zeitversetzt zu verarbeiten. Ferner kann die Ausgabeeinheit ausgebildet sein, um die zumindest zwei Textsignale der zumindest zwei Sprech-Funksignale dem jeweiligen Objekt zuzuordnen und zeitlich sortiert über eine Benutzeroberfläche der Vorrichtung bereitzustellen und/oder in einer Datenbank abzuspeichern. Dies ermöglicht einen Funk-Kommunikations-Verlauf mit mehreren Sprech-Funksignalen nachvollziehen zu können bzw. frühere Sprech-Funksignale nachrecherchieren zu können und dem jeweiligen Objekt zuordnen zu können. Dadurch kann die Vorrichtung ausgebildet sein, um eine Dokumentation einer Funkkommunikation mit mehreren Sprech-Funksignalen zu dokumentieren und bereitzustellen.

Gemäß einem Ausführungsbeispiel ist die Ausgabeeinheit ausgebildet, um sowohl das Textsignal, ein zugeordnetes Objekt, eine Position des Objekts als auch einen Eingangszeitpunkt des Sprech-Funksignals über eine Benutzeroberfläche der Vorrichtung bereitzustellen und/oder in einer Datenbank abzuspeichern. Hierbei kann die Ausgabeeinheit beispielsweise ausgebildet sein, um das Textsignal mit dem zugeordneten Objekt und der Position als Textdaten bereitzustellen oder abzuspeichern, wobei beispielsweise auf der Benutzeroberfläche die Daten wie z. B. in einem Chatverlauf angezeigt werden können. Ferner ist es auch möglich, dass auf der Benutzeroberfläche Kartenmaterial, beispielsweise von Land, Gewässer bzw. Luftraum, angezeigt wird und das Objekt an der Position, ermittelt durch die Objektlokalisationseinheit, mit dem Textsignal eingezeichnet wird. Somit kann auf der Benutzeroberfläche mittels der Ausgabeeinheit beispielsweise das Textsignal mit dem zugeordneten Objekt dargestellt werden. Sowohl die Benutzeroberfläche als auch die Datenbank ermöglichen es, schnell auf die mittels der Vorrichtung ermittelten Daten zugreifen zu können.

Gemäß einem Ausführungsbeispiel bildet das Objekt ein Schiff, ein Flugzeug oder ein Fahrzeug.

Ein Ausführungsbeispiel schafft ein Verfahren zur Verarbeitung eines Sprech-Funksignals, wobei das Verfahren eine Umwandlung des Sprech-Funksignals in ein Textsignal mittels einer Transkriptionseinheit, eine Bestimmung eines Objekts, von dem das Sprech-Funksignal stammt, mittels einer Objektermittlungseinheit, eine Bestimmung einer Positionsinformation des Objekts, von dem das Sprech-Funksignal stammt, mittels einer Objektlokalisationseinheit und eine Zuordnung des Textsignals zu dem Objekt und Bereitstellung des dem Objekt zugeordneten Textsignals mittels einer Ausgabeeinheit, aufweist. Die Objektlokalisationseinheit umfasst zumindest einen Funkpeiler, der ausgebildet ist, um Peildaten zu bestimmen, die eine Position oder ein Gebiet, aus dem das Sprech-Funksignal stammt, angeben und die Objektlokalisationseinheit umfasst ferner einen Positionsdatenempfänger oder ist ausgebildet, um mit demselben zu kommunizieren, um Positionsdaten zu erhalten, die Positionen von Objekten in einer Umgebung der Vorrichtung angeben. Die Peildaten bilden zusammen mit den Positionsdaten die Positionsinformation. Die Bestimmung des Objekts weist eine Bestimmung einer Erkennungswahrscheinlichkeit für die Objekte in der Umgebung der Vorrichtung auf und bei mehreren Objekten mit einer sehr ähnlichen Erkennungswahrscheinlichkeit, eine Bestimmung aller Objekte mit der ähnlichen Erkennungswahrscheinlichkeit als das Objekt, von dem das Sprech-Funksignal stammt. Die Erkennungswahrscheinlichkeit definiert einen Grad einer Übereinstimmung der Positionsdaten mit den Peildaten. In dem Fall, von sehr ähnlichen Erkennungswahrscheinlichkeiten, werden dem Textsignal all diese Objekte mit der ähnlichen Erkennungswahrscheinlichkeit zugeordnet und die Erkennungswahrscheinlichkeit wird jeweils mit angegeben.

Ein Ausführungsbeispiel schafft ein Computerprogramm mit einem Programmcode zur Durchführung des hierin beschriebenen Verfahrens, wenn das Programm auf einem Computer abläuft.

### Figurenkurzbeschreibung

Ausführungsbeispiele gemäß der vorliegenden Erfindung werden nachfolgend Bezug nehmend auf die beiliegenden Figuren näher erläutert. Hinsichtlich der dargestellten schematischen Figuren wird darauf hingewiesen, dass die dargestellten Funktionsblöcke sowohl als Elemente oder Merkmale der erfindungsgemäßen Vorrichtung als auch als entsprechende Verfahrensschritte des erfindungsgemäßen Verfahrens zu verstehen sind, und auch entsprechende Verfahrensschritte des erfindungsgemäßen Verfahrens davon abgeleitet werden können. Es zeigen:
- Fig. 1: eine schematische Darstellung einer Vorrichtung;
- Fig. 2: ein schematisches Blockschaltbild einer Vorrichtung gemäß einem Ausführungsbeispiel der vorliegenden Erfindung;
- Fig. 3: eine schematische Darstellung einer grafischen Bereitstellung eines Textsignals zugeordnet zu einem Objekt mittels der Ausgabeeinheit gemäß einem Ausführungsbeispiel der vorliegenden Erfindung;
- Fig. 4: eine schematische Darstellung einer grafischen Bereitstellung eines Textsignals zugeordnet zu einem Objekt mit einer höchsten Erkennungswahrscheinlichkeit mittels der Ausgabeeinheit gemäß einem Ausführungsbeispiel der vorliegenden Erfindung;
- Fig. 5: eine schematische Darstellung einer nicht eindeutigen Identifikation eines Objekts, von dem das Sprech-Funksignal stammt, mittels einer Vorrichtung gemäß einem Ausführungsbeispiel der vorliegenden Erfindung; und
- Fig. 6: ein Blockdiagramm eines Verfahrens zur Verarbeitung eines Sprech-Funksignals gemäß einem Ausführungsbeispiel der vorliegenden Erfindung.

### Detaillierte Beschreibung der Ausführungsbeispiele gemäß der Figuren

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen oder ähnlichen Bezugszeichen versehen sind, so dass die in unterschiedlichen Ausführungsbeispielen dargestellte Beschreibung dieser Elemente untereinander austauschbar ist bzw. aufeinander angewendet werden kann.

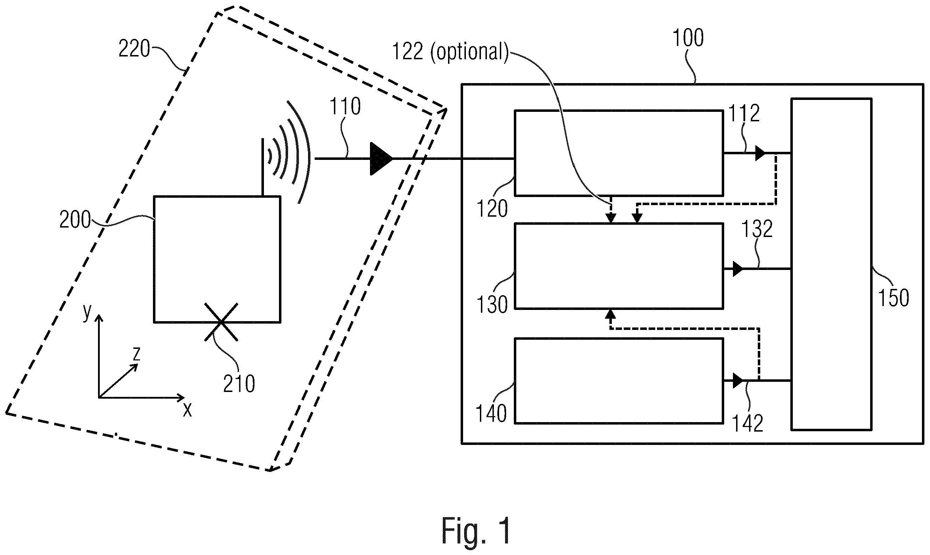

Fig. 1 zeigt eine schematische Darstellung einer Vorrichtung 100 zur Verarbeitung eines Sprech-Funksignals 110. Die Vorrichtung 100 weist eine Transkriptionseinheit 120 auf, die ausgebildet ist, um das Sprech-Funksignal 110 in ein Textsignal 112 umzuwandeln. Ferner weist die Vorrichtung 100 eine Objektermittlungseinheit 130 auf, die ausgebildet ist, um ein Objekt 200, von dem das Sprech-Funksignals 110 stammt, zu bestimmen. Die Vorrichtung 100 weist zusätzlich eine Objektlokalisationseinheit 140 auf, die ausgebildet ist, um eine Positionsinformation 142 des Objekts 200, von dem das Sprech-Funksignals 110 stammt, zu bestimmen und die Vorrichtung 100 weist ferner eine Ausgabeeinheit 150 auf, die ausgebildet ist, um das Textsignal 112 dem Objekt 200 zuzuordnen und bereitzustellen.

Gemäß der Erfindung kann die Objektlokalisationseinheit 140 ausgebildet sein, um als Positionsinformation 142 ein Gebiet 220 zu bestimmen, in dem das Objekt 200 mit einer Wahrscheinlichkeit angeordnet ist, wobei die Wahrscheinlichkeit eine Genauigkeit der Objektlokalisationseinheit 140 in der Bestimmung der Positionsinformation angeben kann. Gemäß Fig. 1 kann das Gebiet 220 eine dreidimensionale Ausdehnung aufweisen. Es ist aber auch möglich, dass das Gebiet 220 eine zweidimensionale (z. B. eine Fläche) oder eine eindimensionale (z. B. ein Peilstrahl) Ausdehnung aufweist. Für die Bestimmung der Positionsinformation 142 weist die Objektlokaiisationseinheit 140 zumindest eine Lokalisationsvorrichtung auf oder ist ausgebildet um mit der zumindest einen Lokalisationsvorrichtung zu kommunizieren, um das Gebiet 220, das die Quelle des Sprech-Funksignals aufweist, zu bestimmen oder eine exakte Position 210 des Objekts zu bestimmen.

Gemäß der Erfindung umfasst die Lokalisationsvorrichtung zumindest einen Funkpeiler umfassen. Hierbei ist anzumerken, dass die Objektlokalisationseinheit 140 ausgebildet sein kann, um ein Gebiet 220 als Positionsinformation 142 zu bestimmen, wenn die Objektlokalisationseinheit 140 nur einen Funkpeiler aufweist oder ausgebildet ist, um mit nur einem Funkpeiler zu kommunizieren. Weist die Objektlokalisationseinheit 140 zumindest zwei Funkpeiler auf oder ist ausgebildet, um mit zumindest zwei Funkpeilern zu kommunizieren, so kann unter Berücksichtigung der Systemungenauigkeiten eine hohe Annährung zur exakten Position 210 ermittelt werden, da in diesem Fall eine Triangulation möglich ist.

Gemäß einem Ausführungsbeispiel ist die Objektlokalisationseinheit 140 ferner ausgebildet, um Positionsdaten, z. B. die exakte Objektposition 210, von Objekten 200 in dem Gebiet 220 zu empfangen. Somit kann die Vorrichtung 100 ausgebildet sein, um zunächst das Gebiet 220 zu bestimmen und anschließend Positionsdaten 210 von Objekten 200 in dem Gebiet zu bestimmen und anstelle des Gebiets 220 die Positionsdaten 210 als Positionsinformation 142 zu bestimmen bzw. bereitzustellen.

Gemäß einem Ausführungsbeispiel kann die Objektlokalisationseinheit 140 ausgebildet sein, um zu erkennen, ob mit dem zumindest einen Funkpeiler ein Gebiet oder eine exakte Position des Objekts 200 bestimmt werden kann und daraufhin entscheiden, ob Positionsdaten 210 von Objekten 200 in dem Gebiet 220 erfasst werden sollen. Hierbei kann die Objektlokalisationseinheit 140 ausgebildet sein, um Positionsdaten 210 zu empfangen, wenn mit dem einen oder den mehreren Funkpeilern nur ein Gebiet bestimmt wird, bzw. entscheiden keine Positionsdaten 210 zu empfangen, wenn die Objektlokalisationseinheit 140 bereits mittels der mehreren Funkpeiler die Positionsdaten 210 bestimmen kann.

Gemäß einem Ausführungsbeispiel kann die Objektlokalisationseinheit 140 einen AIS-Empfänger, einen ADS-B-Empfänger, eine Radaranlage und/oder einen allgemeinen Positionsdatenempfänger aufweisen oder ausgebildet sein, um mit demselben zu kommunizieren, um die Positionsdaten 210 zu empfangen. Die Positionsdaten 210 können wie in Fig. 1 dargestellt beispielsweise eine GPS-Position aufweisen und zusätzlich oder alternativ eine Route, eine Geschwindigkeit und/oder eine Höhe, bezogen zu einem Meeresspiegel, aufweisen. Die Aufzählung der möglichen Positionsdatenempfänger und Positionsdaten 210 ist hierbei als beispielhaft und nicht als abschließend anzusehen.

Im Folgenden werden Merkmale und Funktionalitäten der Objektlokalisationseinheit 140 in anderen Worten dargestellt, wobei insbesondere auf Schiffe und Flugzeuge als zu lokalisierende Objekte 200 eingegangen wird.

Die Schiffsortung sowie die Ortung der Luftfahrzeuge kann mittels der Objektlokalisationseinheit 140 mit unterschiedlichen Technologien erfolgen. AIS-Technik (Schiffsortung), ADS-B-Technik (Luftfahrzeuge), Radargeräte und Funkpeilanalgen sind dabei geeignete Systeme.

**AIS** steht für Automatic Identification System (ETSI EN 303 098-1, 2013-05, S. 9). Allgemein ermöglicht das AIS System z. B. die Überwachung des Schiffsverkehrs und dient der Kollisionsvermeidung unter den Schiffen. Die Funktionsbasis des Systems ist die Ausrüstung von Schiffen mit einem AIS-Transponder in Kombination mit einer elektronischen Seekarte (ECDIS). Im Zeitschlitzverfahren (TDMA - Time Division Multiple Access) senden Transponder z. B. auf den Frequenzen (161.975 MHz und 162.025 MHz) (ITU Radiocommunication Bureau, S. 1 und S. 67) Daten aus, die von anderen Schiffen (ebenfalls durch AIS Transponder) oder Landstationen empfangen werden können. Die Daten beinhalten z. B. die Informationen wie Schiffskennung, aktuelle GPS Position, Kurs, Geschwindigkeit und andere schiffbezogene Daten. Diese Daten lassen sich z. B. auf einer elektronischen Seekarte darstellen. Wenn die Schiffe mit AIS ausgerüstet sind, sind sie demnach für andere sichtbar und können von anderen gesehen werden. Die Objektlokalisationseinheit 140 ist ausgebildet, um z. B. diese Daten zu empfangen und zu verarbeiten, um die Positionsinformation 142 zu bestimmen.

**ADS-B** steht für Automatic Dependent Surveillance Broadcast (s. Spezifikationen in EUROCAE ED 129 "TECHNICAL SPECIFICATION FOR A 1090 MHZ EXTENDED SQUITTER ADS-B GROUND SYSTEM") und ermöglicht, ähnlich wie das AlS-System im maritimen Bereich, den Informationsgewinn über Luftfahrzeuge in der Reichweite des ADS-B-Empfängers. Wenn Luftfahrzeuge mit ADS-B-Transpondern ausgerüstet sind, senden sie z. B. auf 1090 MHz ihre Identifikation, Kurs, Geschwindigkeiten, aktuelle Position und andere Daten aus. Luftfahrzeuge werden dadurch für andere Luftfahrzeuge und Fluglotsen sichtbar. Die Objektlokalisationseinheit 140 ist ausgebildet, um z. B. diese Daten zu empfangen und zu verarbeiten, um die Positionsinformation 142 zu bestimmen.

Gegensatz zu AlS-Systemen und ADSB-Systemen sind **Radaranlagen** nicht auf den gegenseitigen Austausch der Daten angewiesen. Die Grundlage einer Radarortung beruht auf der Reflexionsfähigkeit von elektrisch leitenden Oberflächen. Die meisten Schiffe, Flugzeuge und Landfahrzeuge (Beispiele für Objekte 200) haben einen metallischen Körper, der eine ankommende elektromagnetische Welle reflektiert. Dementsprechend können Radare einen hochfrequenten Sendeimpuls emittieren um nachfolgend das Echo zu empfangen. Da die Ausbreitungsgeschwindigkeit der Funkwellen bekannt ist (Lichtgeschwindigkeit), kann aus der Zeitmessung zwischen dem Sendeimpuls und dem Echo die Entfernung von der Radarstation zum Schiff bestimmt werden. Um einen relativen Winkel des Echosignals zu ermitteln, werden meistens mechanisch rotierende Antennen verwendet, die hochfrequente Impulse in alle Richtungen aussenden und aus denselben Richtungen die Echos empfangen.

Sowohl AlS-Systeme als auch Radarsysteme ermöglichen eine **Kartendarstellung** von mehreren Schiffen in entsprechender Reichweite der Anlagen. Im Kontext der Kommunikationssicherheit wird durch AIS-, ADS-B und Radarortung lediglich die Menge der potentiellen Kommunikationsteilnehmer bestimmt.

**Funkpeilsysteme** messen den Einfallswinkel einer elektromagnetischen Welle auf die Peilantenne und machen dadurch die Ermittlung der Richtung, aus welcher ein Funksignal kommt, möglich. Im Prinzip "analysiert" ein Peilsystem das elektromagnetische Wellenfeld, welches die Peilantenne, die meistens aus mehreren Dipolelementen besteht, umgibt. Hierzu existieren unterschiedliche Peilverfahren. Weit verbreitet sind dabei Interferometer und Dopplersysteme. Das Interferometer-Prinzip bedient sich der direkten Messung des Phasenunterschieds zwischen den einzelnen Elementen der Peilantenne. Die Kenntnis der Abstände zwischen Antennenelementen und der Lichtgeschwindigkeit ermöglicht eine Kalkulation des Peilwinkels durch geometrische Ansätze. Interferometer-Peiler benötigen meistens dabei einen Empfänger pro Antennenelement. Im Vergleich zu Dopplersystemen erlauben solche Systeme die Peilung von sehr kurzen Radioimpulsen, was für die Funküberwachung von Bedeutung ist. Beim Dopplerprinzip werden die einzelnen Antennenstrahler der Peilantenne so umgeschaltet (kommutiert), dass die Peilantenne im Endeffekt einen virtuellen Antennenvibrator repräsentiert, der sich in der einfallenden elektromagnetischen Welle auf einer Kreisbahn mit konstanter Geschwindigkeit bewegt. Bewegt er sich auf die Welle zu, so steigt laut Doppler die empfangene Frequenz. Die empfangene Frequenz sinkt, wenn sich die virtuelle Antenne von der Welle entfernt. Am Empfängereingang entsteht dadurch eine Frequenzmodulation, welche in der Signalverarbeitung demoduliert wird und zu einem "Peilphasensignal" verarbeitet wird. Ändert sich die Einfallsrichtung des Funksignals, so ändert sich entsprechend die Phasenlage des Peilphasensignals. Die Ermittlung des Peilwinkels erfolgt durch die Messung der genannten Phasenlage. Da für die Ortung sowohl der relative Winkel als auch die Entfernung zur Kommunikationsquelle bekannt sein sollten, sollte nicht mit einem einzigen Peilsystem geortet werden. Die exakte oder sehr genaue Funkortung kann durch Kreuzpeilung erfolgen. Hierzu wird jedoch ein weiteres Peilsystem in einem deutlich entfernten Aufstellungsort benötigt. Aus Platzgründen ist die Verwendung eines Funkortungssystems durch Kreuzpeilung auf einem Schiff oder einem Luftfahrzeug nahezu unmöglich. Allerdings können bei landbasierten Anwendungen, wie es bei Seestraßensicherung oder Flugsicherung der Fall ist, mehrere Funkpeilsysteme an verschiedenen Aufstellungsorten durchaus zum Einsatz kommen.

Gemäß einem Ausführungsbeispiel kann ebenfalls die Objektermittlungseinheit 130 einen AIS-Empfänger, einen ADS-B-Empfänger und/oder einen allgemeinen Objektidentifikations-Empfänger aufweisen oder ausgebildet sein, um mit demselben zu kommunizieren, um Objektidentifikationsdaten 132 zumindest eines Objekts 200 zu erhalten, dessen Position 210 zumindest teilweise mit der durch die Objektlokalisationseinheit 140 bestimmten Positionsinformation 142 übereinstimmt. Hierbei ist es möglich, dass sich die Objektermittlungseinheit 130 und die Objektlokalisationseinheit 140 denselben AIS-Empfänger, ADS-B-Empfänger teilen oder sowohl die Objektermittlungseinheit 130 als auch die Objektlokalisationseinheit 140 ausgebildet sind, um mit dem gleichen AIS-Empfänger oder ADS-B-Empfänger zu kommunizieren. Ferner kann die Objektlokalisationseinheit 140 ausgebildet sein, um die Positionsinformation 142 der Objektermittlungseinheit 130 bereitzustellen, damit die Objektermittlungseinheit 130 die Position 210 des Objekts 200 mit der Positionsinformation 142 abgleichen kann. Somit wird ermöglicht, dass die Objektermittlungseinheit 130 zum Beispiel nur Objektidentifikationsdaten 132 von Objekten 200 bestimmt, die zumindest teilweise die Positionsinformation 142 aufweisen, so dass gewährleistet ist, dass die Objekte 200 das Sprech-Funksignal 110 mit einer hohen Wahrscheinlichkeit ausgesendet haben.

Gemäß einem Ausführungsbeispiel weisen die Objektidentifikationsdaten 132 eine Rufnummer des mobilen Seefunkdienstes (MMSI), einen Objektnamen, ein Ziel des Objekts, eine Ladung des Objekts und/oder ein Größe des Objekts auf. Die Aufzählung der Objektidentifikationsdaten ist hierbei als beispielhaft und nicht als abschließend anzusehen.

Gemäß der Erfindung ist die Objektermittlungseinheit 130 ausgebildet, um für zumindest ein Objekt 200, dessen Position 210, zumindest teilweise mit der bestimmten Positionsinformation 142 übereinstimmt, eine Erkennungswahrscheinlichkeit zu bestimmen. Die Erkennungswahrscheinlichkeit kann beispielsweise definieren, mit welcher Sicherheit bzw. Wahrscheinlichkeit das ermittelte Objekt 200 das Sprech-Funksignal 110 ausgesendet hat. Ferner kann die Objektermittlungseinheit 130 ausgebildet sein, um das Objekt 200 mit der höchsten Erkennungswahrscheinlichkeit als das Objekt 200, von dem das Sprech-Funksignal 110 stammt, zu bestimmen. Somit werden beispielsweise nur Daten des Objekts 200 mit der höchsten Erkennungswahrscheinlichkeit als Objektidentifikationsdaten 132 bestimmt.

Gemäß der Erfindung definiert die Erkennungswahrscheinlichkeit einen Grad einer Übereinstimmung der Positionsdaten mit den Peildaten.

Gemäß einem Ausführungsbeispiel kann die Objektermittlungseinheit 130 ausgebildet sein, um mit der Transkriptionseinheit 120 zu kommunizieren, um aus dem Textsignal 112 eine Objektidentifikation 132 des Objekts 200 zu ermitteln.

Gemäß einem Ausführungsbeispiel ist die Transkriptionseinheit 120 ausgebildet, um aus dem Sprech-Funksignal 110 einen Sprachmuster-Code 122 zu extrahieren und der Objektermittlungseinheit 130 bereitzustellen, wobei die Objektermittlungseinheit 130 ausgebildet sein kann, um basierend auf dem Sprachmuster-Code 122 das Objekt 200, von dem das Sprech-Funksignal 110 stammt, zu bestimmen. Hierbei kann die Objektermittlungseinheit 130 Sprachmuster-Codes 122 von z. B. Personen an Bord eines Schiffs, eines Flugzeugs oder eines Landfahrzeugs mit dem jeweiligen Objekt (z. B. dem Schiff, dem Flugzeug oder dem Landfahrzeug) in Bezug setzen und dadurch das Objekt bestimmen. Gemäß einem Ausführungsbeispiel kann die Objektermittlungseinheit 130 das so bestimmte Objekt als Objektidentifikationsdaten 132 bereitstellen.

Gemäß einem Ausführungsbeispiel kann die Transkriptionseinheit 120 ausgebildet sein, um ein neuronales Netzwerk zu nutzen, um das Sprech-Funksignal 110 in ein Textsignal 112 umzuwandeln. Somit weist die Vorrichtung 100 eine vorteilhafte Transkriptionseinheit 120 auf, da mittels des neuronales Netzwerkes sehr schnell Sprech-Funksignale 110 in ein Textsignal 112 umgewandelt werden können.

Gemäß einem Ausführungsbeispiel kann die Transkriptionseinheit 120 ein bereits existierendes Sprachverarbeitungssystem zur Umwandlung einer Sprachnachricht (z. B. dem Sprech-Funksignal 110) in das Textsignal 112 aufweisen. Die Transkriptionseinheit 120 kann somit bereits bekannte Spracherkennungssoftware, wie z. B. im Folgenden kurz dargestellt, aufweisen. Das automatisches Erkennen und Verstehen von gesprochener Sprache durch Computer wird schon seit Jahrzehnten intensiv erforscht. Bei der automatischen Spracherkennung handelt es sich um Verfahren, die es Computern ermöglicht gesprochene Sprache automatisch als Daten zu erfassen und anschließend einer Verarbeitung zugänglich zu machen. Derzeit ist von mehreren Anbietern Spracherkennungssoftware für Sprachverarbeitung und unabhängige Spracherkennung verfügbar und im Einsatz.

Gemäß einem Ausführungsbeispiel ist die Vorrichtung 100 ausgebildet, um zumindest zwei Sprechfunk-Signale 110 gleichzeitig und/oder zeitversetzt zu verarbeiten. Dabei können die zumindest zwei Sprechfunk-Signale 110 von unterschiedlichen Objekten an unterschiedlichen Positionen stammen. Ferner kann die Ausgabeeinheit 150 ausgebildet sein, um zumindest zwei Textsignale 112 der zumindest zwei Sprech-Funksignale 110, ermittelt mittels der Transkriptionseinheit 120, dem jeweiligen Objekt 200 zuzuordnen und zeitlich sortiert über eine Benutzeroberfläche der Vorrichtung 100 bereitzustellen und/oder in einer Datenbank abzuspeichern. Somit ist die Vorrichtung 100 beispielsweise ausgebildet, um eine Funkkommunikation mit den zumindest zwei Sprechfunk-Signalen 110 nachvollziehbar zu dokumentieren.

Gemäß einem Ausführungsbeispiel ist die Ausgabeeinheit 150 ausgebildet, um sowohl das Textsignal 112, ein zugeordnetes Objekt 200, eine Position 210 des Objekts 200als auch einen Eingangszeitpunkt des Sprechfunk-Signals 110 über eine Benutzeroberfläche der Vorrichtung 100 bereitzustellen und/oder in einer Datenbank abzuspeichern. Dabei kann die Ausgabeeinheit 150 das Textsignal 112 von der Transkriptionseinheit 120 empfangen, die Position des Objekts von der Objektlokalisationseinheit 140 über die Positionsinformation 142 und das zugeordnete Objekt über die Objektermittlungseinheit 130, beispielsweise mittels der Objektidentifikationsdaten 132, empfangen. Die Ausgabeeinheit 150 kann konfiguriert sein, um das Textsignal, das zugeordnete Objekt, die Position des Objekts und den Eingangszeitpunkt des Sprechfunk-Signals 110 so aufzuarbeiten, dass ein Benutzer der Vorrichtung 100 sehr einfach und effizient einen Verlauf einer Funckommunikation verfolgen bzw. nachrecherchieren kann.

Gemäß einem Ausführungsbeispiel kann das Objekt 200 ein Schiff, ein Flugzeug oder ein Fahrzeug bilden.

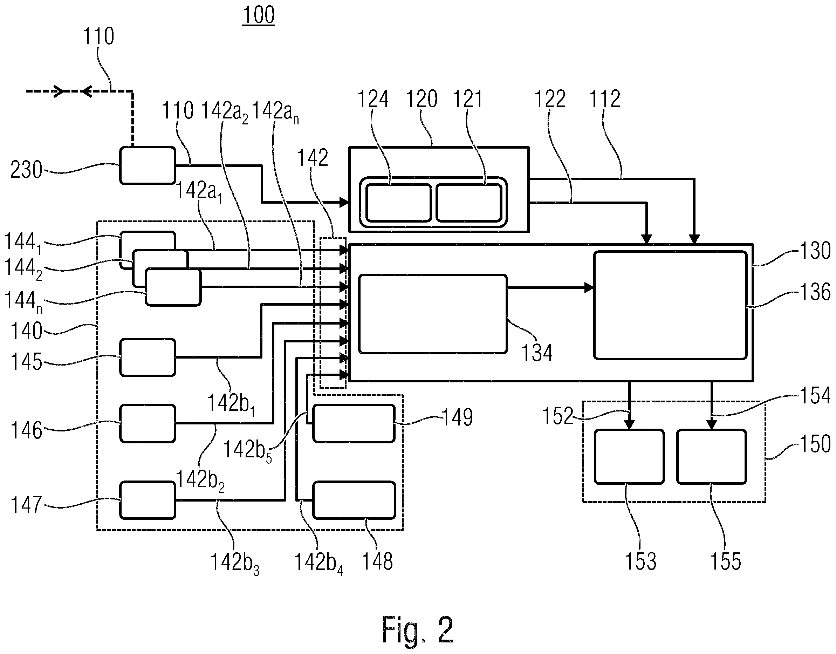

Gemäß einem Ausführungsbeispiel ist die Vorrichtung ausgebildet, um zumindest einen der nachfolgenden drei Punkte aufzuweisen:
- Die Vorrichtung 100 kann in der Spracherkennung ein programmiertes tiefes neuronales Netz zur maritimen Spracherkennung aufweisen das trainiert worden ist, oder mittels der Vorrichtung trainiert werden kann.
- Die Vorrichtung 100 kann in der Schiffserkennung bzw. Erkennung eines Luftfahrzeugs oder Landfahrzeuges, z. B. in der Objektidentifikationseinheit 130, einen entwickelten Algorithmus aufweisen, der Anhand der Eingangsdaten 112, 122 und/oder 142 (siehe Fig. 2 "Systemzeichnung - Blockschaltbild") eine oder mehrere Objekte identifiziert und lokalisiert.
- Verknüpfung von Spracherkennung und Objekterkennung.

Die folgenden Ausführungsbeispiele sollen in anderen Worten den Zusammenhang zwischen Identifikation und Lokalisation verdeutlichen. Dabei beziehen sie sich auf vier Anwendungsfälle:
a. Ein vollausgestattetes Schiff
   - AIS System und ein Funkgerät sind an Bord
b. Ein rudimentär ausgestattetes Schiff
   - Nur ein Funkgerät ist vorhanden.
c. Ein vollausgestattetes Luftfahrzeug
   - ADS-B-Transponder System und ein Funkgerät sind an Bord
d. Ein rudimentär ausgestattetes Luftfahrzeug
   - Nur ein Funkgerät ist an Bord

### a. Vollausgestattetes Schiff

AIS System und ein Funkgerät sind z. B. an Bord

### Szenario

Ein Schiffskapitän meldet sich z. B. per Funk auf Kanal 16. Der AIS-Transponder strahlt z. B. kontinuierlich die entsprechenden Schiffsinformationen aus (MMSI, Schiffsname, Position, Geschwindigkeit, Kurs und andere Daten).

### Lokalisation

### Lokalisation durch Funkpeiler:

Während der Kapitän spricht, wird das Funksignal von der Vorrichtung 100 z. B. gepeilt. Dabei wird z. B. die Richtung von der Peilstation zum Schiff ermittelt. Im Sinne der Lokalisation wird unter Kenntnis der Peilabweichungen des Peilsystems z. B. ein Kegel (Beispiel für ein Gebiet 220) bekannt, indem sich das Schiffsobjekt 200 befindet. Der Verarbeitungsalgorithmus der Vorrichtung 100 verzeichnet diesen Kegel als Fläche mit erhöhter Erkennungswahrscheinlichkeit. Weiterhin hat eine Auswertung des Funksignalpegels einen Einfluss auf Verteilung der Wahrscheinlichkeiten auf einem Peilstrahl (Beispiel für ein Gebiet 220).

Sollte zusätzlich von einem anderen Standort mit einem weiteren Peilsystem gepeilt werden, entsteht ein weiterer "Wahrscheinlichkeitskegel". Beide Wahrscheinlichkeitsflächen werden von dem Algorithmus verarbeitet, wodurch eine eingeschränkte Fläche (z. B. Gebiet 220) mit einer erhöhten Lokalisationswahrscheinlichkeit (z. B. Erkennungswahrscheinlichkeit) entsteht. Hier wird es deutlich, dass eine rudimentäre Lokalisation bereits mit einem Peilsystem erfolgen kann. Die Auswertung des Funksignalpegels und Verwendung von weiteren Peilsystemen erhöhen die Lokalisationsgenauigkeit.

An dieser Stelle kann es bereits festgehalten werden, dass eine Objektlokalisierung erfolgt ist. Es ist schließlich eine Zone (z. B. das Gebiet 220) bekannt aus der ein Funkspruch ausgesendet wurde.

### Erhöhung der Lokalisationsgenauigkeit durch die Auswertung der AIS-Daten:

Aus den empfangenen AIS-Daten werden z. B. Positionsdaten (GPS-Positionen 210, Kurse, Geschwindigkeiten) und Identifikationsdaten (MMSI, Schiffsname, Zielhafen, Ladung, Schiffsgröße, etc.) der Schiffe in Empfangsreichweite der Einrichtung gewonnen. Durch Zeitmessung zwischen der aktuellen Zeit und der Zeitpunkte der AIS-Nachrichten kann unter Berücksichtigung der Schiffskurse und Geschwindigkeiten, die aktuellen Schiffspositionen genauer ermittelt werden.

Befindet sich ein oder mehrere Schiffe (Objekt 200) in der bereits ermittelten Wahrscheinlichkeitszone (Beispiel für ein Gebiet 220. Feld mit GPS-Positionen und zugehörigen Erkennungswahrscheinlichkeiten), so wird eine Schiffposition 210 mit der höchsten Wahrscheinlichkeit als Funksignalquelle erkannt. Die aus AIS-Daten gewonnene und korrigierte GPS-Position schließt die Lokalisation mit der maximal möglichen Systemgenauigkeit ab.

### Identifikation

Die Identifikation wird z. B. aus der Lokalisation abgeleitet. Alle relevanten Identifikationsdaten wie MMSI, Schiffsname, Zielhafen, Ladung, Schiffsgröße werden z. B. aus der zugehörigen AIS-Nachricht gewonnen, die eine erkannte GPS-Position 210 enthalten.

**Transkription**
beispielsweise nachdem ein Sprachsignal empfangen wurde, erfolgt die Transkription lokal und automatisiert, mittels der Transkriptionseinheit 120, auf Basis der über UKW-Seefunk übermittelten Sprachmeldungen (z. B. Sprech-Funksignal 110). Hierfür wird z. B. ein tiefes neuronales Netz verwendet, welches speziell für die Erkennung von Standard Marine Kommunikations Phrasen entwickelt wurde. Durch die Verknüpfung des Transkriptionssystems 120 mit der Senderlokalisation- (z. B. Objektlokalisationseinheit 140) und Identifikation (z. B. Objektermittlungseinheit 130) sind empfangene Sprachmeldungen in verschriftlichen Form (z. B. Textsignal 112) aufrufbar und den jeweiligen lokalisierten Schiffen zuordnungsbar, so dass vergangene Funkmeldungen (z. B. Sprech-Funksignal 110) über eine Benutzeroberfläche nachverfolgt werden können. Sollten transkribierte Sprachnachrichten (z. B. Textsignal 112) Fehler oder nicht erkannte Sprachmeldungen enthalten, so ist über eine Feedback-Schleife die nachträgliche Korrektur möglich, so dass sich die Erkennungsrate des tiefen neuronalen Netzes mit der Zeit zusätzlich optimieren lässt.

### b. Rudimentär ausgestattetes Schiff

Nur ein Funkgerät ist z. B. an Bord

### Szenario

Ein Schiffskapitän meldet sich per Funk z. B. auf Kanal 16. Da das Schiff z. B. keinen AIS-Transponder besitzt werden die entsprechenden Schiffsinformationen (MMSI, Schiffsname, Position, Geschwindigkeit, Kurs und andere Daten) nicht ausgesendet.

### Lokalisation

Die Lokalisation durch Funkpeilung und Auswertung der Signalstärke erfolgt z. B. genauso wie die Lokalisation eines vollausgestatteten Schiffs. Da das Schiff keine AIS-Daten aussendet, besteht eine Wahrscheinlichkeit, dass das Schiffsobjekt sich nicht in der ermittelten Wahrscheinlichkeitszone befindet oder die Erkennungswahrscheinlichkeit anderer umliegender Schiffe als zu niedrig eingestuft werden um eine eindeutige GPS-Position zu ermitteln. Die Lokalisation der Schiffe ohne AIS-Transponder ist daher im Vergleich ungenauer. Es besteht weiterhin sogar ein Potential der Fehl-Erkennung, wenn in der ermittelten Wahrscheinlichkeitszone sich ein vollausgestattetes Schiff befindet, dessen ausgesendete GPS-Position als hochwahrscheinlich eingestuft wird.

### Identifikation

In diesem Szenario ist die Identifikation z. B. nicht unbedingt automatisch möglich. Es kann davon ausgegangen werden, dass ein Funksignal von einem nicht AIS-Ausrüstungspflichtigem Schiff kommt oder das AlS-System defekt oder ausgeschaltet ist.

### Transkription

Die Transkription funktioniert hier genauso wie die Transkription auf einem vollausgestatteten Schiff, da die Transkription lokal nur auf Basis des empfangenen UKW-Funks arbeitet und somit unabhängig von der Ausstattung des Schiffs ist, welches die Sprachnachrichten versendet.

### c. Vollausgestattetes Luftfahrzeug

ADSB Transponder System und ein Funkgerät sind z. B. an Bord

### Szenario

Ein Pilot meldet sich per Funk z. B. auf der bekannten Tower-Frequenz (118-137 MHz). Der ADSB Transponder strahlt z. B. kontinuierlich die entsprechenden Informationen aus (Kennung, Position, Geschwindigkeit, Kurs und andere Daten).

### Lokalisation

### Lokalisation durch Funkpeiler:

Während der Pilot spricht, wird z. B. das Funksignal gepeilt. Dabei wird z. B. die Richtung von der Peilstation zum Luftfahrzeug ermittelt. Im Sinne der Lokalisation wird unter Kenntnis der Peilabweichungen des Peilsystems z. B. ein Kegel bekannt, indem sich das Luftfahrzeug befindet. Der Verarbeitungsalgorithmus verzeichnet diesen Kegel als Fläche mit erhöhter (z. B. das Sprech-Funksignal 110) (Gebiet 220) Erkennungswahrscheinlichkeit. Weiterhin hat die Auswertung des Funksignalpegels einen Einfluss auf Verteilung der Wahrscheinlichkeiten auf dem Peilstrahl (Gebiet 220).

Sollte zusätzlich von einem anderen Standort mit einem weiteren Peilsystem gepeilt werden, entsteht ein weiteres "Wahrscheinlichkeitskegel". Beide Wahrscheinlichkeitsflächen werden von dem Algorithmus z. B. verarbeitet, wodurch eine eingeschränkte Fläche (Gebiet 220) mit einer erhöhten Lokalisationswahrscheinlichkeit entsteht. Hier wird es deutlich, dass eine rudimentäre Lokalisation bereits mit einem Peilsystem erfolgt ist. Die Auswertung des Funksignalpegels und Verwendung von weiteren Peilsystemen erhöhen die Lokalisationsgenauigkeit.

An dieser Stelle kann es bereits festgehalten werden, dass eine Objektlokalisierung erfolgt ist. Es ist schließlich eine Zone bekannt aus der ein Funkspruch ausgesendet wurde.

### Erhöhung der Lokalisationsgenauigkeit durch die Auswertung der ADSB-Daten:

Aus den empfangenen ADSB-Daten werden z. B. Positionsdaten 210 (GPS-Positionen, Kurse, Geschwindigkeiten) und Identifikationsdaten (Kennung, Luftfahrzeugtyp, etc.) der Luftfahrzeuge (Objekt 200) in Empfangsreichweite der Einrichtung gewonnen. Durch Zeitmessung zwischen der aktuellen Zeit und der Zeitpunkte der ADSB-Nachrichten kann unter Berücksichtigung der Kurse und Geschwindigkeiten, die aktuellen Positionen der Luftfahrzeuge genauer ermittelt werden.

Befindet sich ein oder mehrere Luftfahrzeuge in der bereits ermittelten Wahrscheinlichkeitszone (Feld mit GPS-Positionen und zugehörigen Erkennungswahrscheinlichkeiten), so wird eine Luftfahrzeugposition mit der höchsten Wahrscheinlichkeit z. B. als Funksignalquelle erkannt. Die aus ADSB-Daten gewonnene und korrigierte GPS-Position schließt die Lokalisation mit der maximal möglichen Systemgenauigkeit ab.

### Identifikation

Die Identifikation wird z. B. aus der Lokalisation abgeleitet. Alle relevanten Identifikationsdaten wie Kennung, Luftfahrzeugtyp und andere Daten werden z. B. aus der zugehörigen ADSB-Nachricht gewonnen, die eine erkannte GPS-Position enthalten.

### d. Ein rudimentär ausgestattetes Luftfahrzeug (z. B. UL - Ultralight)

Nur ein Funkgerät ist z. B. an Bord

### Szenario

Ein Pilot meldet sich per Funk z. B. auf der bekannten Tower-Frequenz (118-137 MHz). Da das Luftfahrzeug z. B. keinen AIS-Transponder besitzt, werden die entsprechenden Informationen (Kennung, Flugzeugtyp, Position, Geschwindigkeit, Kurs und andere Daten) nicht ausgesendet.

### Lokalisation

Die Lokalisation durch Funkpeilung und Auswertung der Signalstärke erfolgt z. B. genauso wie die Lokalisation eines vollausgestatteten Luftfahrzeugs. Da das Flugzeug oder Hubschrauber keine ADSB-Daten aussendet, besteht eine Wahrscheinlichkeit, dass das Objekt sich nicht in der ermittelten Wahrscheinlichkeitszone befindet oder die Erkennungswahrscheinlichkeit anderer Luftfahrzeuge als zu niedrig eingestuft werden um eine eindeutige GPS-Position zu ermitteln. Die Lokalisation der Luftfahrzeuge ohne Transponder ist daher im Vergleich ungenauer. Es besteht weiterhin sogar ein Potential der Fehl-Erkennung, wenn in der ermittelten Wahrscheinlichkeitszone sich ein vollausgestattetes Luftfahrzeug befindet, dessen ausgesendete GPS-Position als hochwahrscheinlich eingestuft wird.

### Identifikation

In diesem Szenario ist die Identifikation z. B. nicht unbedingt automatisch möglich. Es kann davon ausgegangen werden, dass ein Funksignal von einem nicht ADSB-Ausrüstungspflichtigem Luftfahrzeug kommt oder das Transponder-System defekt oder ausgeschaltet ist.

Im landgebundenen Einsatz, z. B. Rettungsdienst und Katastrophenschutz, werden stationäre oder mobile (Fahrzeuge) Einsatzleitungen mit der Vorrichtung 100, insbesondere mit Transkriptionseinheit 120, der Objektermittlungseinheit 130 sowie der Objektlokalisationseinheit 140 (z. B. Funkpeiler) ausgestattet, um Funksprüche (z. B. ein Sprech-Funksignal 110) von abgesetzten (im Einsatz befindlichen) Einheiten nachzuverfolgen. Damit könnte die Lagebilderstellung und -dokumentation in der Einsatzleitung analog zu maritimen und Luftfahrteinsatzbereich gewährleistet werden.

Die Wirkung der Vorrichtung 100 zur automatischen Transkription des Sprech-Funksignals 110 und zur gleichzeitigen Identifikation des Absenders sowie dessen Lokalisierung besteht darin, die Kommunikation im Funk sicherer zu machen. Die Kommunikationsteilnehmer (z. B. die Objekte 200) werden unterstützt indem Sie klar verstehen **was** gesprochen wurde (Spracherkennung), **wer** gesprochen hat (Identifikation) und **wo** sich das Objekt befindet (Ortung/Lokalisation). Durch die Technologie soll die Nachvollziehbarkeit der komplexen Kommunikationsstruktur im maritimen Sektor; Luftverkehr sowie weiteren Anwendungsbereichen erhöht werden. Ein automatisiertes Transkriptionssystem (z. B. Transkriptionseinheit 120), welches lokal und sprecherunabhängig die empfangene Funkkommunikation verschriftlicht sowie - ergänzt um eine verknüpfte Sendererfassung - speichert, soll zuvorderst Küstenfunkstellen, maritime Such- und Rettungsorganisationen, Behörden sowie Schiffsbesatzungen bei der Wahrnehmung ihrer Aufgaben unterstützen und entlasten. Weiterhin unterstützt die Nutzung die nautische Ausbildung beim Einsatz von Schiffsführungssimulatoren. In der Luftfahrt soll das System die Sicherheit der Kommunikation erhöhen und die Arbeit u.a. der Fluglotsen erleichtern. Für weitere Anwendungsfelder lassen sich ähnliche Vorteile identifizieren.

### Maritime Anwendungen:

Rettungsorganisationen wie beispielsweise DGzRS oder auch das Havarie-Kommando würden bei Rettungseinsätzen durch sichere Kommunikation stark profitieren. Durch die Identifikation, Positionsermittlung sowie Nachvollziehung der Notmeldung eines havarierten Schiffes können Rettungseinsätze schneller und effektiver organisiert werden.

Wasserpolizei, Küstenwache, VTS-Dienstleister (Vessel Traffic Service) - Dienstleister und andere Organisationen, bei denen die Funktion Überwachung einen wesentlichen Teilaspekt ihrer Arbeit darstellt, würde die vorgestellte Technik ebenfalls vorteilhaft genutzt werden können.

Bei der hierin beschriebenen Vorrichtung 100 kann der Fokus ebenfalls auf Integrierbarkeit der Technik in bestehende Systeme gelegt werden. Mögliche ECDIS (Electronic Chart Display and Information System) Hersteller sollen in der Lage sein die Vorrichtung 100 durch ein standardisiertes Protokoll integrieren zu können.

### Anwendung im Luftverkehr:

Ein mögliches Einsatzszenario ist die Überwachung der Küstenlinien aus der Luft. Durch die Verwendung eines luftfahrttauglichen Peilsystems lässt sich die Technik (die Vorrichtung 100) ebenfalls in einen Hubschrauber integrieren. Durch die entsprechende Flughöhe und Geschwindigkeit eines Helikopters wird die Kommunikationsüberwachung auf See in einem wesentlich größeren Areal ermöglicht. Hersteller von Hubschrauber Glas-Cockpits sollen diese Anwendung ebenfalls integrieren können.

### Weitere Anwendungen:

Unterstützung von Such- und Rettungsorganisation im Binnenland, wie z. B. bei der Überwachung von Küstengewässern, oder bei der Organisation von Rettungseinsätzen an Land, beispielsweise in der Koordination von Polizeieinsätzen, Notarzteinsätzen, Feuerwehreinsätzen oder Einsätzen von gemeinnützigen Organisationen, wie die Bergrettung.

Fig. 2 zeigt ein Blockdiagramm einer Vorrichtung 100 gemäß einem Ausführungsbeispiel der vorliegenden Erfindung. Die Vorrichtung 100 ist ausgebildet, um ein Sprech-Funksignal 110, das ein Sprachsignal (z. B. analog oder digital) darstellen kann, mittels eines Funkgeräts 230 (Empfänger) zu empfangen. Das Sprech-Funksignal 110 kann somit von einem Objekt ausgesendet werden und von dem Funkgerät 230 empfangen werden. Die Vorrichtung 100 kann optional das Funkgerät 230 aufweisen, wobei die Vorrichtung 100 somit auch ausgebildet sein kann, um ein Sprech-Funksignal 110 mit dem Funkgerät 230 auszusenden und gleichzeitig das eigens ausgesendete Sprech-Funksignal 110 mittels der Vorrichtung 100 weiterzuverarbeiten. Gemäß einem Ausführungsbeispiel kann es sich bei dem Funkgerät 230 um ein beliebiges Funkgerät oder eine beliebige Sprachsignalquelle (Flugfunkband für Flugfunk, Seefunkband für Seefunk und/oder BOS-Funk für Landfunk) handeln.

Gemäß einem Ausführungsbeispiel kann das Sprech-Funksignal 110 an eine Transkriptionseinheit 120 der Vorrichtung 100 von einem Funkgerätempfänger des Funkgeräts 230 gesendet werden, damit die Vorrichtung 100 das Sprech-Funksignal 110 verarbeiten kann. Die Transkriptionseinheit 120 kann als ein automatisches Transkriptionssystem von Funknachrichten verstanden werden, wobei die Transkriptionseinheit 120 ausgebildet ist, um das Sprech-Funksignal 110 in ein Textsignal 112 umzuwandeln. Hierfür kann die Transkriptionseinheit 120 eine Spracherkennung 124 aufweisen, die das Sprech-Funksignal 110 in das Textsignal 112 (beispielsweise in eine Nachricht in Textform (z. B. ASCII)) umwandeln kann.

Ferner kann die Transkriptionseinheit 120 beispielsweise eine Sprachmusteridentifikation 121 aufweisen, wodurch die Transkriptionseinheit 120 ausgebildet sein kann, um aus dem Sprech-Funksignal 110 einen Sprachmuster-Code 122 zu extrahieren und einer Objektermittlungseinheit 130 der Vorrichtung 100 bereitzustellen. Der Sprachmuster-Code 122 kann eine eindeutige ID, zugehörig zum Funkspruchmuster bilden, mit der ein Objekt, von dem das Sprech-Funksignal 110 stammt, identifiziert werden kann. Die Identifizierung mittels Sprachmuster-Code kann von der Objektermittlungseinheit 130 durchgeführt werden.

Gemäß einem Ausführungsbeispiel ist die Transkriptionseinheit 120 ausgebildet, um ein neuronales Netzwerk zu nutzen, um das Sprech-Funksignal 110 in das Textsignal 112 umzuwandeln.

Die Vorrichtung 100 weist eine Objektlokalisationseinheit 140 auf, die ausgebildet ist, um eine Positionsinformation 142 des Objekts, von dem das Sprech-Funksignal 110 stammt, zu bestimmen. Die Objektlokalisationseinheit 140 weist zumindest einen Funkpeiler 144₁ bis 144ₙ (z. B. teil einer Lokalisationsvorrichtung) auf, um Peildaten 142a, bis 142aₙ als Positionsinformation 142 zu bestimmen. Somit kann die Objektlokalisationseinheit 140 n Funkpeiler 144₁ bis 144ₙ aufweisen oder ausgelegt sein, um mit n Funkpeilern 144₁ bis 144ₙ zu kommunizieren, wobei n eine positive ganze Zahl darstellt. Somit kann die Objektlokalisationseinheit 140 mittels der Funkpeiler 144₁ bis 144ₙ Richtungsermittlungen eines Funksignals, z. B. des Sprech-Funksignals 110, durchführen, wobei ein Einsatz von mehreren Peilern 144₁ bis 144ₙ die Positionsbestimmung der Funkquelle ermöglicht. Wird nur ein Funkpeiler verwendet, so kann als Positionsinformation 142 beispielsweise nur ein grobes Gebiet, in dem die Funkquelle (das Objekt) angeordnet ist, bestimmt werden. Sind jedoch mehrere Peiler 144₁ bis 144ₙ vorhanden und werden verwendet, so kann beispielsweise mittels Kreuzpeilung eine sehr genaue Position der Funkquelle mittels der Objektlokalisationseinheit 140 bestimmt werden.

Die Objektlokalisationseinheit 140 weist ferner einen allgemeinen Positionsdatenempfänger 148 und optional ferner einen GPS-Empfänger 145, einen ADS-B-Empfänger 146, einen AIS-Empfänger 147, und/oder einen Kompass 149 auf oder ist ausgelegt, um mit denselben zu kommunizieren, um die Positionsdaten, wie z. B. GPS-Daten 142b₁, ADS-B-Daten 142b₂, AIS-Daten 142b₃ und/oder weitere andere allgemeine Positionsdaten 142b₄ und 142b₅, zu empfangen. Die Positionsdaten 142b, bis 142b₅ können Positionen von Objekten aufweisen, die sich in einem Gebiet befinden, in dem die Vorrichtung 100 mit einer bestimmten Wahrscheinlichkeit einen Ursprung des Sprech-Funksignals 110 bestimmt hat. Dieses Gebiet kann beispielsweise aus den Peildaten 142a₁ bis 142aₙ hervorgehen. Die Peildaten 142a, bis 142aₙ bilden zusammen mit den Positionsdaten 142b, bis 142b₅ die von der Objektlokalisationseinheit 140 ermittelte Positionsinformation 142. Optional kann die Objektlokalisationseinheit 140 ferner eine Radaranlage aufweisen oder ausgebildet sein, um mit dieser zu kommunizieren, um weitere oder alternative Positionsdaten zu empfangen.

Gemäß einem Ausführungsbeispiel kann der GPS-Empfänger 145 ausgebildet sein, um die eigene Position der Vorrichtung 100 zu ermitteln. Hierfür kann zusätzlich oder alternativ der Kompass 149 genutzt werden, wobei dieser die eigene Ausrichtung (heading), z. B. des Objekts, in dem die Vorrichtung 100 angeordnet ist, ermitteln kann. Die Ermittlung der eigenen Position bzw. eigenen Ausrichtung ist dahin gehend vorteilhaft, dass so die Position von Objekten, von denen das Sprech-Funksignal 110 stammt, sehr schnell, effizient und in Bezug zu der Position bzw. Ausrichtung der Vorrichtung 100 bzw. des Objekts mit der Vorrichtung 100 bestimmt werden kann.

Gemäß einem Ausführungsbeispiel kann der ADS-B-Empfänger 146 ausgebildet sein, um eine Positionsermittlung von ADS-B-emittierenden Objekten, wie z. B. einer Position von Luftfahrzeugen in der Umgebung, durchzuführen. Gemäß einem Ausführungsbeispiel kann der AIS-Empfänger 147 ausgebildet sein, um eine Positionsermittlung von AISemittierenden Objekten, wie z. B. einer Position von Schiffen in der Umgebung, durchzuführen. Gemäß einem Ausführungsbeispiel kann der allgemeine Positionsdaten-Empfänger 148 ausgebildet sein, um eine Positionsermittlung und Identifikation von beliebigen Objekten, wie z. B. Landfahrzeuge, durchzuführen. Somit wird mittels der Objektlokalisationseinheit 140 ermöglicht, unterschiedlichste Objekte, wie z. B. Schiffe, Flugzeuge und/oder Landfahrzeuge, zu lokalisieren.

Gemäß einem Ausführungsbeispiel kann es sich bei den Positionsdaten 142b₁ bis 142b₅ um GPS-Positionen, eine Route, eine Geschwindigkeit und/oder eine Höhe, bezogen zu einem Meeresspiegel, handeln.

Die Vorrichtung 100 weist ferner die Objektermittlungseinheit 130 auf, die ausgebildet ist, um ein Objekt, von dem das Sprech-Funksignal 110 stammt, zu bestimmen. Gemäß einem Ausführungsbeispiel kann die Objektermittlungseinheit 130 auch als automatische Objektidentifikation mit Positionsermittlung bezeichnet werden. Gemäß einem Ausführungsbeispiel empfängt die Objektermittlungseinheit 130 von der Transkriptionseinheit 120 das Textsignal 112 und/oder den Sprachmuster-Code 122 und von der Objektlokalisationseinheit 140 die Positionsinformation 142, die ein Gebiet, aus dem das Sprech-Funksignal kommt, als Peildaten 142a, bis 142aₙ umfassen kann und Positionsdaten 142b₁ bis 142b₅ umfassen kann.

Gemäß einem Ausführungsbeispiel kann die Objektermittlungseinheit 130 in zwei Verarbeitungseinheiten aufgeteilt werden. Eine erste Verarbeitungseinheit 134 kann ausgebildet sein, um eine allgemeine Objekterkennung, wie z. B. eine Schiffserkennung, eine Luftfahrzeugerkennung und/oder eine Landfahrerkennung, durchzuführen. So kann die erste Verarbeitungseinheit 134 beispielsweise die Positionsinformation 142 verarbeiten. Die Objektermittlungseinheit 130 ist ausgebildet, um die Positionsdaten 142b, bis 142b₅ der Positionsinformation 142 mit den Peildaten 142a, bis 142aₙ der Positionsinformation 142 abzugleichen, um Objekte zu bestimmen, von denen mit einer bestimmten Erkennungswahrscheinlichkeit (die die Objektermittlungseinheit 130 bestimmen kann) das Sprech-Funksignal 110 stammt. Die Positionsinformation 142 weist eine Position oder ein Gebiets auf (z. B. die Peildaten 142a₁ bis 142aₙ), aus dem das Sprech-Funksignal 110 stammt, und allgemeine Positionsdaten 142b₁ bis 142b₅, die Positionen von allen Objekten in einer Umgebung der Vorrichtung 100 aufweisen können, auf. Somit ist die Objektermittlungseinheit 130 ausgebildet, um eine Übereinstimmung zwischen den Positionsdaten 142b, bis 142b₅ und den Peildaten 142a, bis 142aₙ zu ermitteln und den so bestimmten Objekten eine Erkennungswahrscheinlichkeit zuzuordnen, wobei die Erkennungswahrscheinlichkeit abhängig von der Übereinstimmung sein kann. In anderen Worten führt die erste Verarbeitungseinheit 134 beispielsweise eine Identifikation und Positionsermittlung von Objekten (Schiffen, Luftfahrzeugen oder Landfahrzeugen), die ein Funksignal 110 senden, mit einer Erkennungswahrscheinlichkeit durch.

Die Erkennungswahrscheinlichkeit definiert einen Grad einer Übereinstimmung der bestimmten Positionsinformation 142a₁ bis 142aₙ mit einer tatsächlichen Position 142b₁ bis 142b₄ eines Objekts. Ferner oder alternativ kann die Objektermittlungseinheit 130 ausgebildet sein, um die Erkennungswahrscheinlichkeit basierend auf Wahrscheinlichkeiten einer korrekten Positionsinformation 142 der Objektlokalisationseinheit 140 zu bestimmen, wobei korrekt bedeuten kann, dass die Positionsdaten-Empfänger 145, 146, 147, 148, 149 eine Ungenauigkeit in der Bestimmung der Positionsdaten 142b₁ bis 142b₅ kleiner als einen unteren Grenzwert aufweisen.

Gemäß einem Ausführungsbeispiel werden die so erkannten Objekte (z. B. Wasserfahrzeuge, Luftfahrzeuge oder Landfahrzeuge) mit der Erkennungswahrscheinlichkeit, der Position, dem Kurs und/oder weiteren Daten, an eine zweite Verarbeitungseinheit 136 der Objektermittlungseinheit 130 von der ersten Verarbeitungseinheit 134 übermittelt. Gemäß einem Ausführungsbeispiel kann die Objektermittlungseinheit 130, z. B. mittels der zweiten Verarbeitungseinheit 136, ausgebildet sein, um auf die erkannten Objekte (z. B. mittels der ersten Verarbeitungseinheit 134) einen Algorithmus zur Objektdatenaufbereitung anzuwenden. Mittels des Algorithmus kann zum einen eine Zusammenfassung von allen Luft-, Wasser- und Landfahrzeugen erfolgen und zum anderen können die Informationen über die Fahrzeuge (Position, Kurs, etc.), Funkspruchtext 112, Sprachmuster-Code 122, Peilung, etc. zu einem oder mehreren Objekten zusammengeführt werden. So kann die Objektermittlungseinheit 130 beispielsweise ausgebildet sein, um das Objekt mit der höchsten Erkennungswahrscheinlichkeit als das Objekt, von dem das Sprech-Funksignal 110 stammt, zu bestimmen und somit alle erkannten Objekte auf ein Objekt zu reduzieren. Gemäß einem Ausführungsbeispiel ist die Objektermittlungseinheit 130 ausgebildet, um aus dem Textsignal 112 eine Objektidentifikation des Objekts zu ermitteln und somit die erkannten Objekte auf dieses eine Objekt zu reduzieren. Gemäß einem Ausführungsbeispiel kann die Objektermittlungseinheit ausgebildet sein, um basierend auf dem Sprachmuster-Code 122 das Objekt zu bestimmen, von dem das Sprech-Funksignal stammt, und somit die erkannten Objekte auf dieses eine Objekt zu reduzieren.

Gemäß einem Ausführungsbeispiel kann die Objektermittlungseinheit 130 die Daten zu mehreren Objekten zusammenführen, wenn mehrere Sprech-Funksignale 110 gleichzeitig von der Vorrichtung 100 verarbeitet werden, oder wenn der Algorithmus zur Objektdatenaufbereitung mehrere Objekte bestimmt, die für die Aussendung des Sprech-Funksignals 110 in Betracht gezogen werden.

Die Vorrichtung 100 weist ferner eine Ausgabeeinheit 150 auf, die ausgebildet ist, um das Textsignal 112 dem Objekt zuzuordnen und bereitzustellen. Gemäß einem Ausführungsbeispiel kann die Ausgabeeinheit 150 eine Schnittstelle 152 für ein Datenprotokoll aufweisen und/oder eine interne grafische Schnittstelle 154. Mittels der Schnittstelle 152 können die von der Vorrichtung 100 ermittelten Daten (z. B. Textsignal zusammen mit Objektidentifikation und Position und Zeit) an ein externes Gerät oder an eine externe Software übermittelt werden, um dort für einen Benutzer der Vorrichtung 100 die Daten bereitzustellen. So können die Daten beispielsweise an ECDIS 153 übermittelt werden und somit in einer elektronischen Seekarte dargestellt werden. Über die interne grafische Schnittstelle 154 werden die Daten gemäß einem Ausführungsbeispiel auf einem Monitor 155, den die Vorrichtung 100 aufweist, dargestellt.

Gemäß einem Ausführungsbeispiel kann die Ausgabeeinheit 150 ausgebildet sein, um zumindest zwei Textsignale 112 von zumindest zwei Sprech-Funksignalen 110 dem jeweiligen Objekt zuzuordnen und zeitlich sortiert über eine Benutzeroberfläche der Vorrichtung (beispielsweise dem Monitor 155) bereitzustellen und/oder in einer Datenbank (beispielsweise über die Schnittstelle 152) abzuspeichern.

Fig. 2 zeigt in anderen Worten ein(e) Vorrichtung, System und Verfahren, welche(s) über UKW-Seefunk bzw. Flugfunk übermittelte Sprachmeldungen (z. B. das Sprech-Funksignal 110) automatisch verschriftlicht, z. B. darstellt und optional über die Verknüpfung verschiedener an Bord befindlicher Informations- und Kommunikationstechniken (AIS, ADS-B, GPS sowie Funkpeilsysteme) eine verlässliche (Ab-)Senderzuordnung jeder empfangenen Sprachnachricht gewährleistet. Die Fig. 2 veranschaulicht den Systementwurf als Blockschaltbild.

Gemäß einem Ausführungsbeispiel besteht das System (z. B. die Vorrichtung 100) aus einem oder mehreren Rechnersystemen und z. B. weiteren Datenquellen, die als Eingangsdaten verarbeitet werden. Als Ausgang (z. B. Ausgabeeinheit 150) besitzt das System eine interne grafische Schnittstelle 154, die zur Darstellung von Sprachnachrichten (z. B. dem Sprech-Funksignal 110 als Textsignal 112) und identifizierten Objekten auf einem beliebigen Monitor 155 geeignet ist. Weiterhin stellt das System eine Datenprotokollschnittstelle 152 (z. B. NMEA), die von anderen Informationssystemen (z. B. ECDIS - Electronic Chart Display Information System 153) verarbeitet werden kann, zur Verfügung (siehe Fig. 2).

Als **Eingang** werden z. B. folgende Daten bzw. Signale verarbeitet (wobei jegliche Kombinationen möglich sind):
a) **Sprachsignal** (z. B. das Sprech-Funksignal 110) - Das Sprachsignal ist z. B. ein analoges oder ein digitales Signal, dass einen empfangenen Funkspruch repräsentiert und von einem beliebigen Funkgerät 230 oder einer dazwischen geschalteten Signaldigitalisierung zur Verfügung gestellt werden kann.
b) **Peildaten 142a₁-142aₙ (Peiler 1 bis n 144₁-144ₙ)** - Die Signale 142a₁-142aₙ repräsentieren die Peildaten, die z. B. über ein beliebiges Protokoll an das System abgeschlossen werden. Die Daten 142a₁-142aₙ enthalten z. B. die Peilung, Signalstärke, eingestellte Frequenz und andere Daten.
c) **GPS-Daten 142b₁** - Die GPS-Daten 142b, sind z. B. für die Ermittlung der eigenen Position (z. B. eigenes Wasserfahrzeug, Luftfahrzeug, Landfahrzeug, Peilstation der Seeverkehrszentrale, Peilstation eines Flughafens) wichtig. Weiterhin werden optional Daten wie die UTC-Zeit und Variation an der aktuellen Position benötigt.
d) **ADS-B Daten 142b₂** - ADS-B-Daten 142b₂ werden üblicherweise von einem ADS-B-Empfänger 146 gewonnen. Sie enthalten z. B. alle relevanten Daten eines Luftfahrzeugs wie beispielsweise Luftfahrzeugidentifikation, Position über Grund, Höhe, Geschwindigkeiten, Kurs und weitere Daten.
e) **AIS-Daten** 142b₃ - Analog zu den ADS-B Daten 142b₂ repräsentieren die AIS-Daten 142b₃ die Positionsinformationen der Wasserfahrzeuge und werden z. B. mittels eines AIS-Receivers 147 empfangen. Die Daten 142b₃ beinhalten z. B. ebenfalls die Schiffsidentifikation, Position, Geschwindigkeit, Kurs und andere Daten.
f) **Allgemeiner Positionsdaten Empfänger** 148 - Das System soll z. B. ebenfalls in der Lage sein durch eine Erweiterung ein beliebiges Datenprotokoll zu verarbeiten. Denkbar ist auch die Entwicklung von proprietären Positionsermittlungs- und Protokollsystemen, welche die Anwendung des Systems auf andere Anwendungsgebiete erweitert (Bsp. Land, Berge, etc.)
**g) Kompass** 149 - Das System benötigt optional Kompassdaten um die Ausrichtung des eigenen Objekts (z. B. eigenes Wasserfahrzeug, Luftfahrzeug, Landfahrzeug, Peilstation der Seeverkehrszentrale, Peilstation eines Flughafens) zu bestimmen. Üblicherweise werden die Kompassdaten 142bs zu der Ausrichtung der Peilantenne zugeordnet. Es werden demnach z. B. pro Peilantenne entsprechende Kompassinformationen benötigt. Bei stationären Peilanlagen kann die Ausrichtung direkt in das System eingetragen werden.

Gemäß einem Ausführungsbeispiel erfolgt die Verarbeitung in 3 Schritten. Der analoge oder digitale Funkspruch (z. B. das Sprech-Funksignal 110) wird zunächst mittels eines automatischen Transkriptionssystems 120 in z. B. eine ASCII - Textnachricht 112 umgewandelt. Parallel wird z. B. der Absender von einem oder mehreren Peilsystemen 144₁₋144ₙ angepeilt. Durch den Algorithmus zur automatischen Objektidentifikation (z. B. mittels der Objektermittlungseinheit 130) und Positionsermittlung wird z. B. der Absender (z. B. das Objekt) des Funkspruchs identifiziert und seine Position bestimmt. Zu den erkannten Objekten wird z. B. eine entsprechende Erkennungs- bzw. Identifikationswahrscheinlichkeit angegeben. Schließlich wird die Textnachricht 112 des Funkspruchs 110 zu dem entsprechenden Objekt zugeordnet.

Als **Ausgang** (z. B. Ausgabeeinheit 150) werden erkannte Objekte und Nachrichten 112 ausgegeben. Es existieren dabei z. B. folgende Möglichkeiten:
a) **Schnittstelle Datenprotokoll** 152 - Die Schnittstelle kann eine beliebig definierte Schnittstelle bzw. Protokoll sein, die eine Integration des Systems in andere Systeme ermöglicht
b) **Interne grafische Schnittstelle** 154 - Das System kann ebenfalls eine eigene proprietäre grafische Darstellung von ermittelten Daten beinhalten (Eigene grafische Darstellung auf einem Monitor/Ausgabestelle 155).

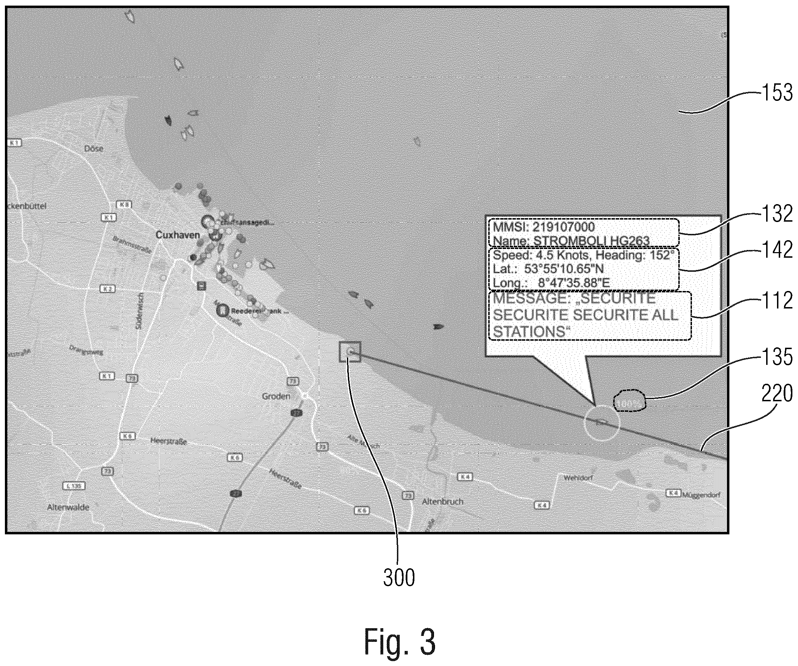

Die nachfolgenden Fig. 3 bis 5 stellen eine mögliche Darstellung der grafischen Schnittstelle 154 anhand einer maritimen Anwendung dar. Andere Anwendungen z. B. in der Luftfahrt oder in anderen Anwendungsgebieten würden der gleichen Logik folgen.

Fig. 3 zeigt eine graphische Darstellung einer transkribierten Funknachricht 112 (z. B. Textsignal) eines als Absender identifizierten Wasserfahrzeuges (100% Identifikationswahrscheinlichkeit 135 (z. B. Erkennungswahrscheinlichkeit)) in einer elektronischen Seekarte 153 gemäß einem Ausführungsbeispiel der vorliegenden Erfindung. Ferner wird der Funknachricht 112 ein Objekt bzw. eine Objektidentifikation 132 und optional eine Positionsinformation 142 zugeordnet.

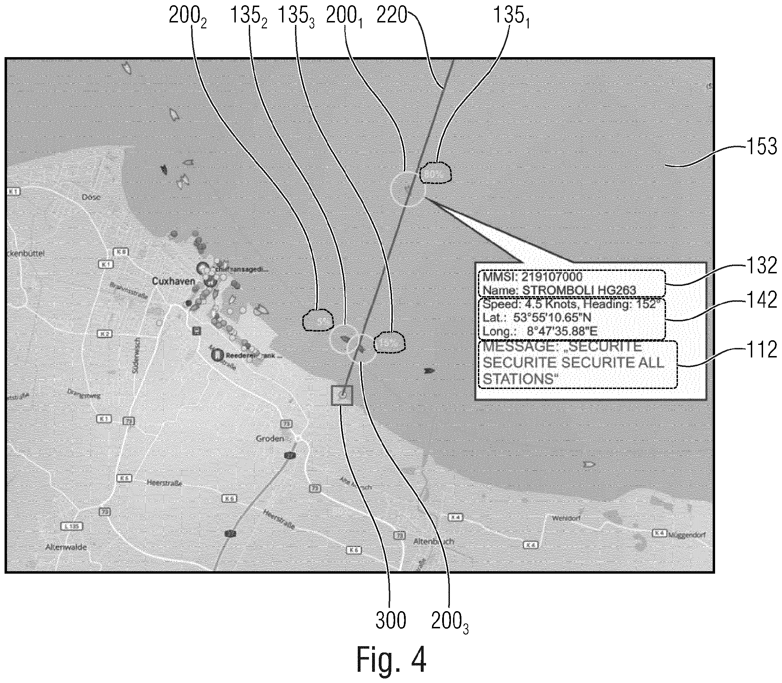

Fig. 4 zeigt eine grafische Darstellung einer transkribierten Funknachricht 112 (z. B. Textsignal) mit drei möglichen Wasserfahrzeugen (z. B. den Objekten 200₁ bis 200₃) in einer elektronischen Seekarte 153, wobei die transkribierte Funknachricht 112 dem Objekt 200₁ mit Objektidentifikation 132 und Positionsinformation 142 mit einer höchsten Identifikationswahrscheinlichkeit 135₁ von 80 % (z. B. Erkennungswahrscheinlichkeit) zugeordnet wird. Für jedes der erkannten Objekte 200₁ bis 200₃ kann die erfindungsgemäße Vorrichtung eine Identifikationswahrscheinlichkeit 135₁ bis 135₃ bestimmen und diese dem jeweiligen Objekt zuordnen.

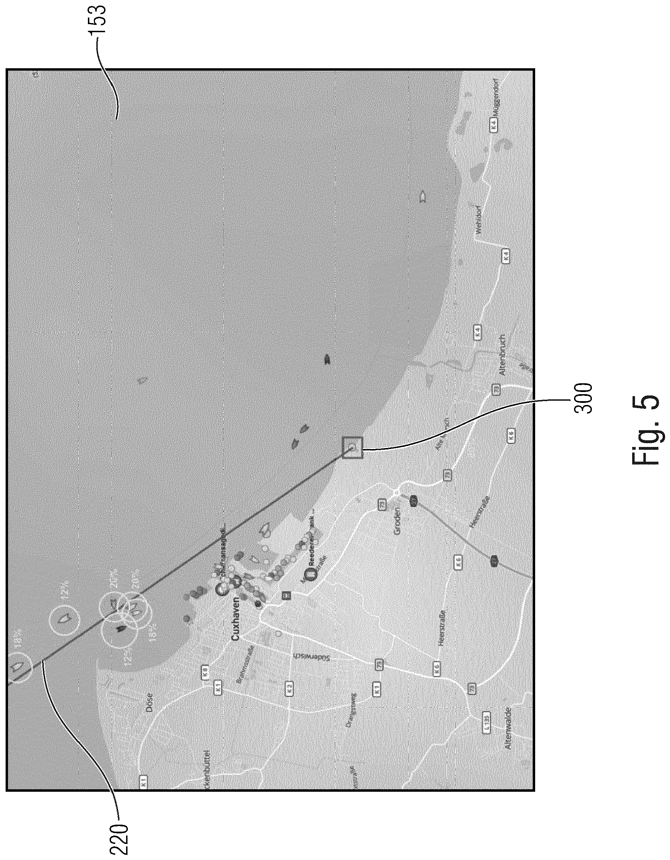

Fig. 5 zeigt eine grafische Darstellung einer elektronischen Seekarte 153, wenn eine Identifikation eines Absenders nicht eindeutig mittels der Vorrichtung bestimmt werden kann.

Gemäß einem Ausführungsbeispiel kann die erfindungsgemäße Vorrichtung 100 in einer Landstation 300 angeordnet sein. Mittels eines Funkpeilers kann die Vorrichtung ausgebildet sein, um ein Gebiet 220 zu bestimmen, in dem das Objekt, von dem das Sprech-Funksignal stammt, mit einer Wahrscheinlichkeit 135, 135₁ bis 135₃ angeordnet ist. Gemäß den Ausführungsbeispielen in den Fig. 3 bis 5 kann es sich bei dem Gebiet 220 um einen Peilstrahl, ermittelt mittels eines Funkpeilers, handeln.

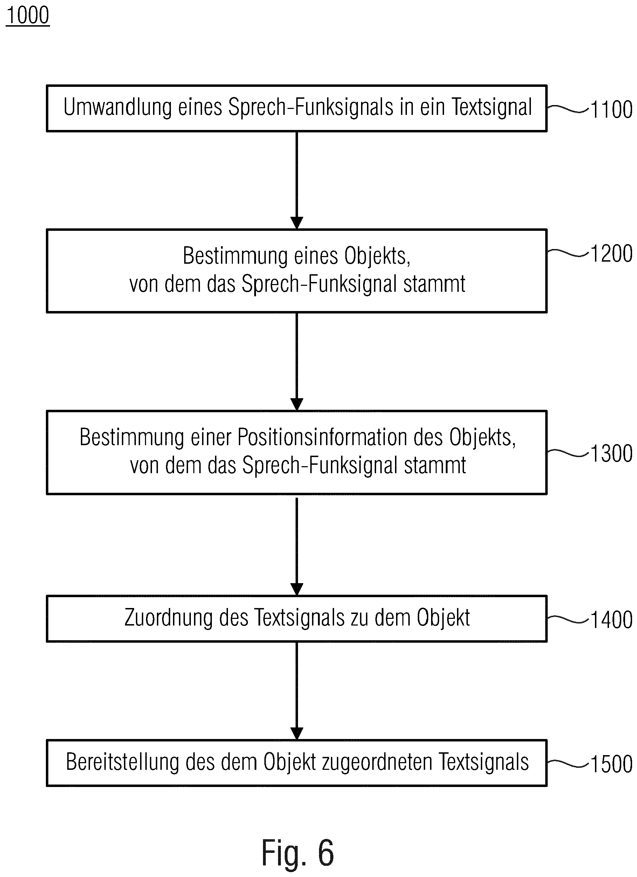

Fig. 6 zeigt ein Blockdiagramm eines Verfahrens 1000 zur Verarbeitung eines Sprech-Funksignals, wobei das Verfahren eine Umwandlung 1100 des Sprech-Funksignals in ein Textsignal mittels einer Transkriptionseinheit aufweist. Ferner weist das Verfahren 1000 eine Bestimmung 1200 eines Objekts, von dem das Sprech-Funksignal stammt, mittels einer Objektermittlungseinheit auf. Des Weiteren weist das Verfahren 1000 eine Bestimmung 1300 einer Positionsinformation des Objekts auf, von dem das Sprech-Funksignal stammt, mittels einer Objektlokalisationseinheit, eine Zuordnung 1400 des Textsignals zu dem Objekt und eine Bereitstellung 1500 des dem Objekt zugeordneten Textsignals mittels einer Ausgabeeinheit.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hard-ware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hard-ware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (100) zur Verarbeitung eines Sprech-Funksignals (110) mit folgenden Merkmalen:
einer Transkriptionseinheit (120), die ausgebildet ist, um das Sprech-Funksignal (110) in ein Textsignal (112) umzuwandeln;
einer Objektermittlungseinheit (130), die ausgebildet ist, um ein Objekt (200), von dem das Sprech-Funksignal (110) stammt, zu bestimmen;
einer Objektlokalisationseinheit (140), die ausgebildet ist, um eine Positionsinformation (142) des Objekts (200), von dem das Sprech-Funksignal (110) stammt, zu bestimmen,
wobei die Objektlokalisationseinheit (140) zumindest einen Funkpeiler (144₁ bis 144ₙ) umfasst, der ausgebildet ist, um Peildaten (142a₁ bis 142aₙ) zu bestimmen, die eine Position oder ein Gebiet, aus dem das Sprech-Funksignal (110) stammt, angeben, und
wobei die Objektlokalisationseinheit (140) ferner einen Positionsdatenempfänger umfasst oder ausgebildet ist, um mit demselben zu kommunizieren, um Positionsdaten (142b, bis 142bs) zu erhalten, die Positionen von Objekten in einer Umgebung der Vorrichtung (100) angeben,
wobei die Peildaten (142a₁ bis 142aₙ) zusammen mit den Positionsdaten (142b, bis 142b₅) die Positionsinformation (142) bilden;
einer Ausgabeeinheit (150), die ausgebildet ist, um das Textsignal (112) dem Objekt (200) zuzuordnen und bereitzustellen; und
wobei die Objektermittlungseinheit (130) ausgebildet ist, um für die Objekte in der Umgebung der Vorrichtung (100) jeweils eine Erkennungswahrscheinlichkeit (135, 135₁ bis 135₃) zu bestimmen, wobei die Erkennungswahrscheinlichkeit einen Grad einer Übereinstimmung der Positionsdaten (142b₁ bis 142b₅) mit den Peildaten (142a₁ bis 142aₙ) definiert, und
wobei die Objektermittlungseinheit (130) ausgebildet ist, um bei mehreren Objekten mit einer sehr ähnlichen Erkennungswahrscheinlichkeit, alle Objekte mit der ähnlichen Erkennungswahrscheinlichkeit als das Objekt (200), von dem das Sprech-Funksignal (110) stammt, zu bestimmen, wobei die Ausgabeeinheit ausgebildet ist, um in diesem Fall dem Textsignal all diese Objekte mit der ähnlichen Erkennungswahrscheinlichkeit zuzuordnen und jeweils die Erkennungswahrscheinlichkeit mit anzugeben.

2. Vorrichtung (100) gemäß Anspruch 1, wobei der Positionsdatenempfänger ein AIS-Empfänger (147), ein ADS-B-Empfänger (146) und/oder eine Radaranlage aufweist, um die Positionsdaten (142b₁ bis 142b₅) zu empfangen, und
wobei die Positionsdaten (142b₁ bis 142b₅) eine GPS-Position, eine Route, eine Geschwindigkeit und/oder eine Höhe, bezogen zu einem Meeresspiegel, aufweisen.

3. Vorrichtung (100) gemäß Anspruch 1 oder Anspruch 2, wobei die Objektermittlungseinheit (130) einen AIS-Empfänger (147), einen ADS-B-Empfänger (146) und/oder einen allgemeinen Objektidentifikations-Empfänger aufweist oder ausgebildet ist, um mit demselben zu kommunizieren, um Objektidentifikationsdaten (132) zumindest eines Objekts (200) zu erhalten, dessen Position (210) zumindest teilweise mit der durch die Objektlokalisationseinheit (140) bestimmten Positionsinformation (142) übereinstimmt.

4. Vorrichtung (100) gemäß Anspruch 3, wobei die Objektidentifikationsdaten (132) eine Rufnummer des mobilen Seefunkdienstes (MMSI), einen Objektnamen, ein Ziel des Objekts (200), eine Ladung des Objekts (200) und/oder eine Größe des Objekts (200) aufweist.

5. Vorrichtung (100) gemäß einem der Ansprüche 1 bis 4, wobei die Objektermittlungseinheit (130) ausgebildet ist, um mit der Transkriptionseinheit (120) zu kommunizieren, um aus dem Textsignal (112) Objektidentifikationsdaten (132) des Objekts (200) zu ermitteln.

6. Vorrichtung (100) gemäß einem der Ansprüche 1 bis 5, wobei die Transkriptionseinheit (120) ausgebildet ist, um aus dem Sprech-Funksignal (110) einen Sprachmuster-Code (122) zu extrahieren und der Objektermittlungseinheit (130) bereitzustellen,
wobei die Objektermittlungseinheit (130) ausgebildet ist, um basierend auf dem Sprachmuster-Code (122) das Objekt (200), von dem das Sprech-Funksignal (110) stammt, zu bestimmen.

7. Vorrichtung (100) gemäß einem der Ansprüche 1 bis 6, wobei die Transkriptionseinheit (120) ausgebildet ist, um ein neuronales Netzwerk zu nutzen, um das Sprech-Funksignal (110) in ein Textsignal (112) umzuwandeln.

8. Vorrichtung (100) gemäß einem der Ansprüche 1 bis 7, wobei die Vorrichtung (100) ausgebildet ist, um zumindest zwei Sprech-Funksignale (110) gleichzeitig und/oder zeitversetzt zu verarbeiten und
wobei die Ausgabeeinheit (150) ausgebildet ist, um zumindest zwei Textsignale (112) der zumindest zwei Sprech-Funksignale (110) dem jeweiligen Objekt (200) zuzuordnen und zeitlich sortiert über eine Benutzeroberfläche (155) der Vorrichtung (100) bereitzustellen und/oder in einer Datenbank abzuspeichern.

9. Vorrichtung (100) gemäß einem der Ansprüche 1 bis 8, wobei die Ausgabeeinheit (150) ausgebildet ist, um sowohl das Textsignal (112), ein zugeordnetes Objekt (200), eine Position (210) des Objekts (200) als auch einen Eingangszeitpunkt des Sprechfunk-Signals über eine Benutzeroberfläche (155) der Vorrichtung (100) bereitzustellen und/oder in einer Datenbank abzuspeichern.

10. Vorrichtung (100) gemäß einem der Ansprüche 1 bis 9, wobei das Objekt (200) ein Schiff, ein Flugzeug oder ein Fahrzeug bildet.

11. Verfahren (1000) zur Verarbeitung eines Sprech-Funksignals, wobei das Verfahren folgende Schritte aufweist:
Umwandlung (1100) des Sprech-Funksignals in ein Textsignal mittels einer Transkriptionseinheit;
Bestimmung (1200) eines Objekts, von dem das Sprech-Funksignal stammt, mittels einer Objektermittlungseinheit;
Bestimmung (1300) einer Positionsinformation des Objekts, von dem das Sprech-Funksignal stammt, mittels einer Objektlokalisationseinheit,
wobei die Objektlokalisationseinheit (140) zumindest einen Funkpeiler (144₁ bis 144ₙ) umfasst, der ausgebildet ist, um Peildaten zu bestimmen, die eine Position oder ein Gebiet, aus dem das Sprech-Funksignal stammt, angeben, und
wobei die Objektlokalisationseinheit ferner einen Positionsdatenempfänger umfasst oder ausgebildet ist, um mit demselben zu kommunizieren, um Positionsdaten zu erhalten, die Positionen von Objekten in einer Umgebung der Vorrichtung angeben
wobei die Peildaten zusammen mit den Positionsdaten die Positionsinformation bilden; und
Zuordnung (1400) des Textsignals zu dem Objekt und Bereitstellung (1500) des dem Objekt zugeordneten Textsignals mittels einer Ausgabeeinheit;
wobei die Bestimmung (1200) des Objekts eine Bestimmung einer Erkennungswahrscheinlichkeit für die Objekte in der Umgebung der Vorrichtung aufweist und bei mehreren Objekten mit einer sehr ähnlichen Erkennungswahrscheinlichkeit, eine Bestimmung aller Objekte mit der ähnlichen Erkennungswahrscheinlichkeit als das Objekt, von dem das Sprech-Funksignal stammt, aufweist,
wobei die Erkennungswahrscheinlichkeit einen Grad einer Übereinstimmung der Positionsdaten mit den Peildaten definiert, und
wobei in dem Fall, von sehr ähnlichen Erkennungswahrscheinlichkeiten, dem Textsignal all diese Objekte mit der ähnlichen Erkennungswahrscheinlichkeit zugeordnet (1400) werden und jeweils die Erkennungswahrscheinlichkeit mit angegeben wird.

12. Computerprogramm mit einem Programmcode zur Durchführung des Verfahrens nach Anspruch 11, wenn das Programm auf einem Computer abläuft.

## Claims

1. An apparatus (100) for processing a voice radio signal (110), comprising:
a transcription unit (120) configured to convert the voice radio signal (110) into a text signal (112);
an object determination unit (130) configured to determine an object (200) from which the voice radio signal (110) originates;
an object localization unit (140) configured to determine position information (142) of the object (200) from which the voice radio signal (110) originates,
wherein the object localization unit (140) comprises at least one radio direction finder (144₁ to 144ₙ) configured to determine bearing data (142a₁ to 142aₙ) indicating a position or an area from which the voice radio signal (110) originates, and
wherein the object localization unit (140) further comprises a position data receiver or is configured to communicate with the same in order to obtain position data (142b, to 142b₅) indicating the positions of objects in a surrounding area of the apparatus (100),
wherein the bearing data (142a₁ to 142aₙ), along with the position data (142b₁ to 142b₅), form the position information (142);
an output unit (150) configured to allocate the text signal (112) to the object (200) and to provide the same; and
wherein the object determination unit (130) is configured to determine a detection probability (135, 135₁ to 135₃) for each of the objects in a surrounding area of the apparatus (100), wherein the detection probability defines a degree of correspondence of the position data (142b, to 142b₅) with the bearing data (142a₁ to 142aₙ), and
wherein the object determination unit (130) is configured to determine, for multiple objects with a very similar detection probability, all objects with the similar detection probability as the object (200) from which the voice radio signal (110) originates, wherein the output unit is configured in this case to allocate all these objects with the similar detection probability to the text signal and to also state the detection probability, respectively.

2. The apparatus (100) according to claim 1, wherein the position data receiver comprises an AIS receiver (147), an ADS-B receiver (146) and/or a radar unit to receive the position data (142b₁ to 142b₅)
wherein the positon data (142b₁ to 142b₅) comprise a GPS position, a route, a speed and/or an altitude relative to sea level.

3. The apparatus (100) according to claim 1 or 2, wherein the object determination unit (130) comprises an AIS receiver (147), an ADS-B receiver (146) and/or a general object identification receiver or is configured to communicate with the same to obtain object identification data (132) of at least one object (200) whose position (210) at least partly matches the position information (142) determined by the object localization unit (140).

4. The apparatus (100) according to claim 3, wherein the object identification data (132) comprise a call number of the maritime mobile service (MMSI), an object name, a target of the object (200), a load of the object (200) and/or a size of the object (200).

5. The apparatus (100) according to one of claims 1 to 4, wherein the object determination unit (130) is configured to communicate with the transcription unit (120) to determine object identification data (132) of the object (200) from the text signal (112).

6. The apparatus (100) according to one of claims 1 to 5, wherein the transcription unit (120) is configured to extract a speech pattern code (122) from the voice radio signal (110) and to provide the same to the object determination unit (130),
wherein the object determination unit (130) is configured to determine the object (200) from which the voice radio signal (110) originates based on the speech pattern code (122).

7. The apparatus (100) according to one of claims 1 to 6, wherein the transcription unit (120) is configured to use a neuronal network to convert the voice radio signal (110) into a text signal (112).

8. The apparatus (100) according to one of claims 1 to 7, wherein the apparatus (100) is configured to process at least two voice radio signals (110) simultaneously and/or offset in time, and
wherein the output unit (150) is configured to allocate at least two text signals (112) of the at least two voice radio signals (110) to the respective object (200) and to provide the same chronologically to the apparatus (100) via a user interface (155) and/or to store the same in a database.

9. The apparatus (100) according to one of claims 1 to 8, wherein the output unit (150) is configured to provide both the text signal (112), an allocated object (200), a position (210) of the object (200) as well as an input time of the voice radio signal to the apparatus (100) via a user interface (155) and/or to store the same in a database.

10. The apparatus (100) according to one of claims 1 to 9, wherein the object (200) is a ship, an airplane or a vehicle.

11. A method (1000) for processing a voice radio signal, the method comprising the following steps:
converting (1100) the voice radio signal into a text signal by means of a transcription unit;
determining (1200) an object from which the voice radio signal originates by means of an object determination unit;
determining (1300) position information of the object from which the voice radio signal originates by means of an object localization unit,
wherein the object localization unit (140) comprises at least one radio direction finder (144₁ to 144ₙ) configured to determine bearing data indicating a position or an area from which the voice radio signal originates, and
wherein the object localization unit further comprises a position data receiver or is configured to communicate with the same in order to obtain position data indicating the positions of objects in a surrounding area of the apparatus,
wherein the bearing data, along with the position data, form the position information; and
allocating (1400) the text signal to the object and providing (1500) the text signal allocated to the object by means of an output unit;
wherein determining (1200) the object comprises determining a detection probability for the objects in the surrounding area of the apparatus and, for multiple objects with a very similar detection probability, determining all objects with the similar detection probability as the object (200) from which the voice radio signal (110) originates,
wherein the detection probability defines a degree of correspondence of the position data with the bearing data, and
wherein in the case of very similar detection probabilities all these objects with the similar detection probability are allocated (1400) to the text signal and the detection probability is also stated, respectively.

12. A computer program with a program code for performing the method according to claim 11 when the program runs on a computer.

## Revendications

1. Dispositif (100) de traitement d'un signal radio vocal (110), aux caractéristiques suivantes:
une unité de transcription (120) qui est conçue pour convertir le signal radio vocal (110) en un signal de texte (112);
une unité de détermination d'objet (130) qui est conçue pour déterminer un objet (200) duquel provient le signal radio vocal (110);
une unité de localisation d'objet (140) qui est conçue pour déterminer une information de position (142) de l'objet (200) duquel provient le signal radio vocal (110),
dans lequel l'unité de localisation d'objet (140) comporte au moins un radiogoniomètre (144₁ à 144ₙ) qui est conçu pour déterminer les données de goniométrie (142a₁ à 142aₙ) qui indiquent une position ou une région de laquelle provient le signal radio vocal (110), et
dans lequel l'unité de localisation d'objet (140) comporte par ailleurs un récepteur de données de position ou est conçue pour communiquer avec ce dernier pour obtenir les données de position (142b₁ à 142b₅) qui indiquent les positions d'objets dans les environs du dispositif (100),
dans lequel les données de goniométrie (142a₁ à 142aₙ) forment, ensemble avec les données de position (142b₁ à 142b₅), les informations de position (142);
une unité de sortie (150) qui est conçue pour associer le signal de texte (112) à l'objet (200) et le mettre à disposition; et
dans lequel l'unité de détermination d'objet (130) est conçue pour déterminer, pour chacun des objets dans les environs du dispositif (100), une probabilité de reconnaissance (135, 135₁ à 135₃), dans lequel la probabilité de reconnaissance définit un degré de coïncidence des données de position (142bi à 142bs) avec les données de goniométrie (142ai à 142aₙ), et
dans lequel l'unité de détermination d'objet (130) est conçue pour déterminer, dans le cas de plusieurs objets avec une probabilité de reconnaissance très similaire, tous les objets avec la probabilité de reconnaissance similaire comme l'objet (200) duquel provient le signal radio vocal (110), dans lequel l'unité de sortie est conçue pour associer, dans ce cas, au signal de texte tous ces objets à la probabilité de reconnaissance similaire et pour spécifier chaque fois également la probabilité de reconnaissance.

2. Dispositif (100) selon la revendication 1, dans lequel le récepteur de données de position présente un récepteur AIS (147), un récepteur ADS-B (146) et/ou une installation radar destiné à recevoir les données de position (142bi à 142bs), et
dans lequel les données de position (142bi à 142bs) présentent une position GPS, un itinéraire, une vitesse et/ou une altitude par rapport au niveau de la mer.

3. Dispositif (100) selon la revendication 1 ou la revendication 2, dans lequel l'unité de détermination d'objet (130) présente un récepteur AIS (147), un récepteur ADS-B (146) et/ou un récepteur d'identification d'objet général ou est conçue pour communiquer avec ce dernier pour obtenir les données d'identification d'objet (132) d'au moins un objet (200) dont la position (210) coïncide au moins en partie avec l'information de position (142) déterminée par l'unité de localisation d'objet (140).

4. Dispositif (100) selon la revendication 3, dans lequel les données d'identification d'objet (132) présentent un numéro d'appel du service mobile de radiocommunication maritime (MMSI), un nom d'objet, une destination de l'objet (200), une charge de l'objet (200) et/ou une grandeur de l'objet (200).

5. Dispositif (100) selon l'une des revendications 1 à 4, dans lequel l'unité de détermination d'objet (130) est conçue pour communiquer avec l'unité de transcription (120) pour déterminer à partir du signal de texte (112) les données d'identification d'objet (132) de l'objet (200).

6. Dispositif (100) selon l'une des revendications 1 à 5, dans lequel l'unité de transcription (120) est conçue pour extraire du signal radio vocal (110) un code de modèle vocal (122) et pour le mettre à disposition de l'unité de détermination d'objet (130),
dans lequel l'unité de détermination d'objet (130) est conçue pour déterminer, sur base du code de modèle vocal (122), l'objet (200) duquel provient le signal radio vocal (110).

7. Dispositif (100) selon l'une des revendications 1 à 6, dans lequel l'unité de transcription (120) est conçue pour utiliser un réseau neuronal pour convertir le signal radio vocal (110) en un signal de texte (112).

8. Dispositif (100) selon l'une des revendications 1 à 7, dans lequel le dispositif (100) est conçu pour traiter simultanément et/ou de manière décalée dans le temps au moins deux signaux radio vocaux (110), et
dans lequel l'unité de sortie (150) est conçue pour associer au moins deux signaux de texte (112) des au moins deux signaux radio vocaux (110) à l'objet respectif (200) et pour les mettre à disposition de manière triée dans le temps par l'intermédiaire d'une interface d'utilisateur (155) du dispositif (100) et/ou pour les mémoriser dans une base de données.

9. Dispositif (100) selon l'une des revendications 1 à 8, dans lequel l'unité de sortie (150) est conçue pour mettre à disposition tant le signal de texte (112), un objet associé (200), une position (210) de l'objet (200) ainsi qu'un moment d'entrée du signal radio vocal par l'intermédiaire d'une interface d'utilisateur (155) du dispositif (100) et/ou les mémoriser dans une base de données.

10. Dispositif (100) selon l'une des revendications 1 à 9, dans lequel l'objet (200) constitue un navire, un avion ou un véhicule.

11. Procédé (1000) pour traiter un signal radio vocal, dans lequel le procédé présente les étapes suivantes consistant à:
convertir (1100) le signal radio vocal en un signal de texte au moyen d'une unité de transcription;
déterminer (1200) un objet duquel provient le signal radio vocal au moyen d'une unité de détermination d'objet;
déterminer (1300) une information de position de l'objet duquel provient le signal radio vocal au moyen d'une unité de localisation d'objet,
dans lequel l'unité de localisation d'objet (140) comporte au moins un radiogoniomètre (144₁ à 144ₙ) qui est conçu pour déterminer les données de goniométrie qui indiquent une position ou une région de laquelle provient le signal radio vocal, et
dans lequel l'unité de localisation d'objet comporte par ailleurs un récepteur de données de position ou est conçue pour communiquer avec ce dernier pour obtenir les données de position qui indiquent les positions d'objets dans les environs du dispositif,
dans lequel les données de goniométrie forment, ensemble avec les données de position, les informations de position;
associer (1400) le signal de texte à l'objet et mettre à disposition (1500) le signal de texte associé à l'objet au moyen d'une unité de sortie;
dans lequel la détermination (1200) de l'objet présente le fait de déterminer une probabilité de reconnaissance pour les objets dans les environs du dispositif et de déterminer, dans le cas de plusieurs objets avec une probabilité de reconnaissance très similaire, tous les objets avec la probabilité de reconnaissance similaire comme l'objet duquel provient le signal radio vocal,
dans lequel la probabilité de reconnaissance définit un degré de coïncidence des données de position avec les données de goniométrie, et
dans lequel, dans le cas de probabilités de reconnaissance très similaires, tous ces objets avec la probabilité de reconnaissance similaire sont associés au signal de texte (1400) et la probabilité de reconnaissance est chaque fois également indiquée.

12. Programme d'ordinateur avec un code de programme pour mettre en oeuvre le procédé selon la revendication 11 lorsque le programme est exécuté sur un ordinateur.
